# EUROPÄISCHE PATENTSCHRIFT

(11) **EP 3 246 121 B1**
(45) Veröffentlichungstag und Bekanntmachung des Hinweises auf die Patenterteilung: **13.07.2022**
(21) Anmeldenummer: 17167914.5
(22) Anmeldetag: 25.04.2017
(51) Int. Cl.: B23D 47/02

(54) **WERKZEUGMASCHINE MIT EINEM ANLAGEKÖRPER**
MACHINE TOOL WITH EQUIPMENT BODY
MACHINE-OUTIL DOTÉE D'UN CORPS D'APPUI

(30) Priorität: 20.05.2016 DE 102016109377
(43) Veröffentlichungstag der Anmeldung: 22.11.2017
(73) Patentinhaber: Festool GmbH, 73240 Wendlingen am Neckar (DE)
(72) Erfinder: Wolfgang, Spengler, 73272 Neidlingen (DE); Werbach, Martin, 89264 Oberhausen (DE)
(74) Vertreter: Patentanwälte Bregenzer und Reule Partnerschaftsgesellschaft mbB

(56) Entgegenhaltungen:
- JP-A- 2003 211 402
- US-A- 5 297 463
- US-A1- 2007 221 028

## Beschreibung

Die Erfindung betrifft eine Werkzeugmaschine, insbesondere halbstationäre oder mobile Werkzeugmaschine, zur Bearbeitung von Werkstücken anhand eines Werkzeugs, gemäß dem Oberbegriff des Anspruchs 1.

Eine derartige Werkzeugmaschine in Gestalt einer Gehrungssäge ist beispielsweise in US 5,297,463 A erläutert.

Eine derartige Werkzeugmaschine in Gestalt einer Kappsäge ist beispielsweise in erläutert. Bei einer aus DE 10 2006 059 751 A1 bekannten Kappsäge vorhandenen Anlagekörper bilden Anschläge, an die das Werkstück angelegt werden kann. Die Anschläge stehen weit nach oben vor die Auflagefläche vor, sodass auch große Werkstücke optimal abgestützt sind. An sich ergonomisch hat sich das Konzept erwiesen, an den Anlagekörpern die Klemmeinrichtung sowie deren Bedienhandhabe vorzusehen. Allerdings sind an die Fertigung hohe Anforderungen zu stellen, damit die Anlagefläche eines Anlagekörpers mit einer stationären Anlagefläche, die beispielsweise an der Halterung für den Anlagekörper vorgesehen ist, fluchtet. Ansonsten entsteht dort in der Praxis eine Stufe, d.h. das Werkstück kann nicht gleichzeitig flächig an der Anlagefläche des Anlagekörpers und der Stationär-Anlagefläche anliegen.

Es ist daher die Aufgabe der vorliegenden Erfindung, ein verbessertes Befestigungskonzept für den mindestens einen Anlagekörper bereitzustellen.

Zur Lösung der Aufgabe ist eine Werkzeugmaschine gemäß Anspruch 1 vorgesehen.

Bei der eingangs genannten Werkzeugmaschine ist vorgesehen, dass die Klemmkraft eine zu der Anlagefläche rechtwinkelige Kraftkomponente oder rechtwinkelige Kraftrichtung aufweist und zur Anlagefläche nicht rechtwinkelige, insbesondere parallele, Bereiche der Klemmanlagefläche und der Klemmstützfläche gegeneinander spannt, so dass die Anlagefläche des Anlagekörpers bezüglich des nicht rechtwinkeligen Bereichs der Klemmanlagefläche eine vorbestimmte Längsposition bezüglich der zur Anlagefläche rechtwinkeligen Kraftkomponente oder Kraftrichtung der Klemmkraft einnimmt und/oder mit einer bezüglich der Auflagefläche stationären, insbesondere an der Halterung angeordneten, Stationär-Anlagefläche fluchtet.

Es ist also ein Grundgedanke, dass die Klemmanlagefläche und korrespondierend die Klemmstützfläche zur Auflagefläche, auf der das Werkstück zur Bearbeitung anhand des Werkzeugs, beispielsweise zum Einbringen eines Trennschnittes, zum Bohren oder dergleichen, anliegt, quer zur Auflagefläche verlaufen und/oder sich parallel zur Anlagefläche erstrecken, sodass die Position der Anlagefläche des mindestens einen Anlagekörpers in Relation zu der Klemmanlagefläche definiert ist. Die Klemmanlagefläche ist also keine sich parallel zur Auflagefläche erstreckende Fläche, wie bei der Kappsäge der eingangs genannten Art, sondern eine dazu winkelige Fläche.

Vorteilhaft erweist sich, dass die Klemmeinrichtung einschließlich ihres Bedienelements an dem beweglichen Anlagekörper angeordnet ist, also ergonomisch günstig zugänglich ist. Bevorzugt ist der mindestens eine Anlagekörper von der Halterung entfernbar, beispielsweise in der Lösestellung der Klemmeinrichtung oder in einer Freigabestellung der Klemmeinrichtung, in welcher eine Verhakung des Anlagekörpers mit der Halterung aufgehoben ist. Die Klemmeinrichtung verbleibt zweckmäßigerweise am beweglichen Anlagekörper auch dann, wenn dieser von der Werkzeugmaschine entfernt ist. Die beweglichen Komponenten der Klemmeinrichtung sind vorzugsweise am Anlagekörper verliersicher gehalten.

Wenn eine stationäre Anlagefläche vorgesehen ist, beispielsweise an der Halterung oder an einem sonstigen Körper der Maschinenbasis, fluchtet die Anlagefläche des mindestens einen Anlagekörpers mit derselben. Somit ist eine absolute Planlage oder fluchtende Lage von Anlageflächen, die beweglich oder lösbar sind, also am Anlagekörper angeordnet sind, und Anlageflächen realisierbar, die stationär, beispielsweise an der Maschinenbasis, insbesondere an der Halterung, sind.

Vorteilhaft ist vorgesehen, dass die Klemmstützfläche und/oder die Klemmanlagefläche und/oder der mindestens eine Klemmanlagebereich zu der Anlagefläche des mindestens einen Anlagekörpers und/oder zu der Stationär-Anlagefläche parallel ist.

An dieser Stelle sei aber erwähnt, dass auch eine Schrägneigung der Klemmstützfläche, des Klemmanlagebereichs oder der Klemmanlagefläche als Ganzes bezüglich der Anlagefläche des Anlagekörpers oder der Stationär-Anlagefläche oder beiden möglich ist. Eine Grenze dieser Schrägneigung ist vorzugsweise eine Parallellage zur Auflagefläche, d.h. dass die Klemmstützfläche, die Klemmanlagefläche oder der mindestens eine Klemmanlagebereich nicht parallel zur Auflagefläche sind. Die Schrägneigung kann aber auch begrenzt sein auf einen Winkelbereich von beispielsweise 0-70°, insbesondere von 0° bis 50°, besonders bevorzugt in einem Bereich von 0° bis 45°. Die Schrägneigung ist insbesondere noch kleiner, beispielsweise in einem Bereich von 0-15° oder 0-30°. Bei allen vorgenannten Fallkonstellationen entspricht 0° einer parallelen Lage der Klemmstützfläche oder Klemmanlagefläche zur Anlagefläche des Anlagekörpers. Bei geringeren Schrägneigungen von Klemmanlagebereich oder Klemmanlagefläche oder Klemmstützfläche relativ zur Anlagefläche des mindestens einen Anlagekörpers kann die Position der Anlagefläche des Anlagekörpers relativ zur Auflagefläche in Bezug auf eine Normalenrichtung der Anlagefläche besonders günstig eingestellt werden.

Zweckmäßigerweise ist vorgesehen, dass an der Klemmstützfläche und/oder Klemmanlagefläche oder dem mindestens einen Klemmanlagebereich mindestens eine Vertiefung vorgesehen ist. Die mindestens eine Vertiefung ermöglicht beispielsweise, dass sich dort Späne oder dergleichen andere Verschmutzungen sammeln können. Die erhabenen oder vorstehenden Bereiche neben der Vertiefung sind vorzugsweise Planflächen und stellen die Klemmanlagefläche, Klemmstützfläche oder den Klemmanlagebereich bereit.

Bevorzugt ist es, wenn die Klemmstützfläche und/oder die Klemmanlagefläche und/oder der mindestens eine Klemmanlagebereich als Planflächen ausgestaltet sind. Der Vorteil dabei ist es, dass diese Flächen flächig aneinander anliegen können. Allerdings ist es vorteilhaft, wenn an mindestens einer Paarung derartig aneinander anliegender Flächen Vertiefungen, Aussparungen oder dergleichen vorgesehen sind. Dort können sich beispielsweise Schmutzpartikel sammeln, ohne dass sie die Verklemmung oder den Halt des Anlagekörpers an der Halterung behindern.

Weiterhin zweckmäßig ist es, wenn die Klemmstützfläche und/oder die Klemmanlagefläche und/oder der mindestens eine Klemmanlagebereich sich parallel zu der Anlagefläche erstrecken. Die vorgenannten Flächen weisen also vorteilhaft eine Längsgestalt auf.

Zweckmäßig ist es, wenn die Klemmstützfläche sich im Wesentlichen über die gesamte Länge der Anlagefläche des mindestens einen Anlagekörpers neben der Anlagefläche erstreckt.

Vorteilhaft ist vorgesehen, dass die Klemmstützfläche und die Anlagefläche des mindestens einen Anlagekörpers eine Stufe bilden oder an einer Stufe angeordnet sind. Es ist möglich, dass die Klemmstützfläche in Bezug eine Normalenrichtung der Anlagefläche gegenüber der Anlagefläche des Anlagekörpers zurückversetzt ist. Somit steht also die Anlagefläche des in Richtung der Auflagefläche vor die Klemmstützfläche vor.

Vorteilhaft kann vorgesehen sein, dass die Klemmstützfläche und die Anlagefläche in einer Ebene liegen. Somit kann die Klemmstützfläche sozusagen in die Klemmanlagefläche übergehen oder umgekehrt.

Zweckmäßigerweise ist vorgesehen, dass die Klemmstützfläche und die Anlagefläche des Anlagekörpers an einander entgegengesetzten Seiten des Anlagekörpers angeordnet sind.

Erfindungsgemäß ist vorgesehen, dass die rechtwinkelige Kraftkomponente der Klemmkraft und die Anlage-Normalkraft, mit der das Werkstück gegen die Anlagefläche des Anlagekörpers gedrückt wird, gleichgerichtet sind oder in die gleiche Richtung weisen. Somit wirkt die Anlage-Normalkraft vorteilhaft im Sinne einer Kraftverstärkung und/oder nicht im Sinne einer Kraftschwächung der Klemmkraft.

Bevorzugt ist es, wenn die Klemmstützfläche oder der Klemmkörper oder beide an einem Klemmvorsprung des mindestens einen Anlagekörpers vorgesehen sind. Eine bevorzugte Konfiguration sieht dabei vor, dass die Klemmstützfläche und der Klemmkörper einander entgegengesetzt wirkend in eine Klemmaufnahme der Halterung eingreifen. Die Klemmaufnahme kann beispielsweise die nachfolgend noch erläuterte Führungsaufnahme sein oder an dieser angeordnet sein. Beispielsweise ist es vorteilhaft, wenn der Klemmkörper an einer von der Klemmstützfläche abgewandten Seite des Klemmvorsprungs vorgesehen ist.

Es ist vorteilhaft, wenn der Klemmkörper und die Klemmstützfläche spreizfußartig in eine Klemmaufnahme der Halterung eingreifen.

Vorteilhaft ist vorgesehen, dass der mindestens eine Anlagekörper mit der Halterung ausschließlich mit der Klemmstützfläche und dem Klemmkörper in Kontakt ist, wenn er an der Halterung durch die Klemmeinrichtung fixiert ist. Dadurch ist eine eventuelle statische Überbestimmung vermeidbar.

Zwar wäre es prinzipiell denkbar, dass der mindestens eine Anschlagkörper nur in einer einzigen Längsposition quer zur Auflagefläche an der Halterung montierbar ist. Es können auch mehrere Halterungen vorgesehen sein, an denen der Anschlagkörper wahlweise montierbar ist, beispielsweise zwei Halterungen, die quer zur Auflagefläche nebeneinander vor dieser Auflagefläche angeordnet sind.

Bevorzugt ist vorgesehen, dass der mindestens eine Anlagekörper an einer Linearführung entlang einer Längsachse quer zur Auflagefläche längsverstellbar ist.

Eine bevorzugte Anordnung sieht vor, dass die Halterung mindestens eine Führungsaufnahme oder einen Führungsvorsprung zur Längsführung des mindestens einen Anlagekörpers quer zu der Auflagefläche aufweist. An dem Führungsvorsprung oder der Führungsaufnahme ist der mindestens eine Anlagekörper quer zur Auflagefläche längsverschieblich gelagert. Beispielsweise greift der Führungsvorsprung in eine Führungsaufnahme des Anlagekörpers ein oder umgekehrt greift ein Führungsvorsprung des Anlagekörpers in die Führungsaufnahme ein. Die Führungsaufnahme der Halterung oder des Anlagekörpers hat beispielsweise einen U-förmigen, V-förmigen oder dergleichen anderen muldenförmigen Querschnitt. Eine Längsachse, entlang derer der mindestens eine Anlagekörper an der Führungsaufnahme oder am Führungsvorsprung geführt ist, verläuft vorteilhaft parallel zu einer Längsachse, entlang derer sich die Anlagefläche und/oder die Klemmstützfläche und/oder die Klemmanlagefläche erstrecken.

Auch dann, wenn der Anlagekörper entlang der Führung verstellt wird, ist die Position der Klemmung anhand des Klemmkörpers stets dieselbe, d.h. dass beispielsweise der Anlagekörper in seinem mittleren Abschnitt anhand der Klemmeinrichtung der Halterung verklemmt wird. An dieser Stelle sei erwähnt, dass vorteilhaft nur eine einzige Klemmeinrichtung am Anlagekörper vorgesehen ist, was die Bedienung erleichtert.

Es versteht sich, dass der Anlagekörper zwei oder weitere Klemmeinrichtungen und/oder zwei oder weitere Klemmkörper aufweisen kann. Es ist auch möglich, dass das Bedienelement zur Betätigung von mindestens zwei Klemmkörpern ausgestaltet ist, beispielsweise anhand eines Übertragungsgetriebes oder eines Übertragungselements zwischen dem Bedienelement und den Klemmkörpern.

Zweckmäßigerweise ist vorgesehen, dass an der Halterung und an dem mindestens einen Anlagekörper und/oder dem Klemmkörper Hakenkonturen vorgesehen sind, die zumindest in der Klemmstellung, vorzugsweise aber auch in der Lösestellung, ineinander eingreifen, so dass der mindestens eine Anlagekörper parallel zu einer senkrechten Achse oder Normalenachse der Auflagefläche nicht von der Halterung entfernbar ist und/oder in einer Querrichtung, insbesondere einer einzigen Querrichtung, quer zu der Klemmanlagefläche unverlierbar an der Halterung gehalten ist. Bevorzugt ist vorgesehen, dass der mindestens eine Anlagekörper auch dann, wenn die Hakenkonturen in Eingriff miteinander sind, verschieblich an der Halterung gelagert ist, insbesondere wie oben bereits erläutert entlang einer Verschiebeachse linearverschieblich oder quer zur Auflagefläche für das Werkstück verschieblich ist. Der Anlagekörper kann jedoch nicht von der Halterung quer zur Verschiebeachse entfernt werden. Es kann möglich sein, dass beispielsweise eine Führungsaufnahme der Halterung an einem Längsendbereich seitlich offen ist, sodass trotz der Verhakung der Anlagekörpers an dem Längsendbereich seitlich aus der Führungsaufnahme entnehmbar ist. Der Anlagekörper kann aber aufgrund der Verhakung nicht aus der Führungsaufnahme beispielsweise nach oben herausgezogen werden.

Durch das Bedienelement ist der Klemmkörper zwischen der Klemmstellung und der Lösestellung betätigbar. In der Lösestellung können die Hakenkonturen des Klemmkörpers und der Halterung außer Eingriff sein. Es ist aber auch möglich, dass in der Lösestellung die Hakenkonturen noch in Eingriff sind, sodass ein unverlierbarer Halt des Anlagekörpers an der Halterung realisierbar ist. Es ist bei dieser Konstellation auch möglich, dass der Klemmkörper anhand des Bedienelements aus der Lösestellung der Klemmeinrichtung weiter in eine Freigabestellung verstellbar ist, in der die Hakenkonturen des Klemmkörpers und der Halterung außer Eingriff sind. Es ist also wie beim Ausführungsbeispiel in der Zeichnung vorteilhaft vorgesehen, dass der Klemmkörper anhand des Bedienelements zwischen der Klemmstellung, der Lösestellung und einer Freigabestellung verstellbar ist, wobei in der Klemmstellung und der Lösestellung die Hakenkonturen des Klemmkörpers und der Halterung in Eingriff sind, in der Freigabestellung nicht.

Es ist möglich, dass am Anlagekörper eine ortsfeste Hakenkontur vorgesehen ist, die mit einer ortsfesten Hakenkontur der Halterung in Eingriff gelangen kann. Beispielsweise ist es möglich, den Anlagekörper durch eine Schwenkbewegung in Eingriff mit der Hakenkontur der Halterung zu bringen. Bevorzugt ist die Hakenkontur auf der Seite des Anlagekörpers jedoch nicht oder nicht ausschließlich am Anlagekörper vorgesehen, sondern am Klemmkörper. Dadurch ist die Hakenkontur an einer beweglichen Komponente vorgesehen, die durch Betätigung anhand des Bedienelements in Eingriff oder außer Eingriff mit der Hakenkontur der Halterung gebracht werden kann.

Die Hakenkontur der Halterung ist zweckmäßigerweise unmittelbar neben der Klemmanlagefläche vorgesehen. Beispielsweise ist die Hakenkontur an oder von einem in eine Führungsaufnahme vorstehenden Rand oder Randabschnitt der Halterung gebildet. Insbesondere ist es vorteilhaft, wenn die Klemmanlagefläche an einer Führungsnut, insbesondere deren Seitenwand oder Seitenschenkel, vorgesehen ist und zur Bildung der Hakenkontur oder als Hakenkontur eine Vertiefung an einem Seitenschenkel vorgesehen ist. In der Vertiefung befindet sich vorzugsweise die Klemmanlagefläche oder Klemmanlagebereich.

Ein zweckmäßiges Konzept sieht vor, dass der Klemmkörper eine erste Hakenkontur zum Verhaken mit der Halterung und eine zweite Hakenkontur zum Verhaken mit dem mindestens einen Anlagekörper aufweist, die zumindest in der Klemmstellung in Eingriff mit Hakenkonturen des Anlagekörpers und der Halterung sind. Der Klemmkörper kann beispielsweise in der Art einer Klammer die Hakenkonturen der Halterung und des Anlagekörpers zusammenhalten. Es ist bevorzugt, wenn auch in der Lösestellung der Klemmeinrichtung dieser Eingriff der Hakenkonturen gewährleistet ist, beispielsweise um den Anlagekörper relativ zu der Halterung zu verschieben, wobei der Anlagekörper dennoch unverlierbar an der Halterung gehalten ist. Es ist möglich, dass die Hakenkonturen des Klemmkörpers und des Anlagekörpers auch in der bereits erwähnten Freigabestellung, in welcher der Anlagekörper von der Halterung entfernbar ist und/oder die Hakenkonturen des Klemmkörpers und der Halterung außer Eingriff miteinander sind, in Eingriff miteinander bleiben.

Es ist zum Beispiel möglich, dass die Hakenkonturen des Klemmkörpers und des Anlagekörpers ein Schwenklager bereitstellen und/oder in der Art eines Schwenklagers miteinander in Eingriff sind.

Ein bevorzugtes Konzept sieht vor, dass ein Klemmabschnitt des Klemmkörpers neben einer Stützfläche des Anlagekörpers, insbesondere in einer Aussparung an der Stützfläche, angeordnet ist, wobei dieser Klemmabschnitt in der Klemmstellung weiter vor die Stützfläche vorsteht als in der Lösestellung. Die Stützfläche und die Klemmstützfläche sind zweckmäßigerweise an einander entgegengesetzten Seiten des Klemmkörpers vorgesehen. Die Stützfläche bildet zweckmäßigerweise eine Führungsfläche zum Führen des Anlagekörpers an der Halterung, beispielsweise an einer Führungsnut. Der Anlagekörper kann anhand der Stützflächen oder Führungsfläche vorzugsweise in einer Längsrichtung quer zur Auflagefläche für das Werkstück an der Halterung verschoben werden. Es versteht sich, dass die Stützfläche zweckmäßigerweise ebenso wie schon im Zusammenhang mit der Klemmstützfläche erwähnt mindestens eine Aussparung oder Vertiefung aufweisen kann, in welcher sich beispielsweise Späne oder dergleichen anderer Abraum sammeln kann. Der Klemmabschnitt kann beispielsweise im Rahmen einer Schwenkbewegung vor die Stützfläche vor und hinter die Stützfläche zurück verstellt werden.

Das Bedienelement umfasst zweckmäßigerweise einen Drehknauf. Das Bedienelement kann aber auch einen Betätigungshebel oder dergleichen umfassen. Das Bedienelement kann integral am Klemmkörper angeordnet sein. Es ist bevorzugt, wenn das Bedienelement und der Klemmkörper separate Komponenten darstellen.

Die Klemmeinrichtung umfasst zweckmäßigerweise ein Stellgetriebe zum Verstellen des Klemmkörpers zwischen der Lösestellung und der Klemmstellung. Dabei ist gemeint, dass das Stellgetriebe den Klemmkörper von der Lösestellung in die Klemmstellung oder von der Klemmstellung in die Lösestellung oder beides verstellen kann. Das Getriebe oder Stellgetriebe wirkt zweckmäßigerweise im Sinne einer Kraftverstärkung vom Bedienelement zum Klemmkörper. Das Getriebe kann auch eine Bewegungsumlenkung vom Bedienelement zum Klemmkörper realisieren. Das Stellgetriebe kann beispielsweise eines oder mehrere der nachfolgend genannten Getriebearten umfassen: Schraubengetriebe, Nockengetriebe, Keilgetriebe, Hebelgetriebe.

Das Bedienelement ist zweckmäßigerweise anhand eines Wälzlagers, insbesondere eines Kugellagers, an dem Anlagekörper drehbar gelagert. Dadurch ist eine besonders leichte Betätigung möglich.

Bevorzugt ist es, wenn der Klemmkörper an dem mindestens einen Anlagekörper zwischen der Klemmstellung und der Lösestellung schwenkbar oder verschieblich oder beides gelagert ist. Die Lagerung kann beispielsweise durch eine Verhakung des Klemmkörpers mit dem Anlagekörper realisiert sein.

Zweckmäßigerweise ist der Klemmkörper in die Klemmstellung oder Lösestellung durch eine Federanordnung belastet. Beispielsweise ist eine Schraubenfeder vorgesehen. Besonders bevorzugt ist eine Blattfeder, die den Klemmkörper in die Lösestellung beaufschlagt. Die Federanordnung kann beispielsweise auch eine Feder umfassen, die insbesondere blattartige oder flächige Federschenkel aufweist, von denen sich ein Federschenkel am Anlagekörper abstützt und der andere Federschenkel am Klemmkörper abstützt.

Der Klemmkörper erstreckt sich zweckmäßigerweise im Wesentlichen von einer von der Halterung abgewandten Oberseite des Anlagekörpers bis zu einer der Halterung zugewandten Unterseite des Klemmkörpers. Im Bereich der Oberseite ist zweckmäßigerweise eine Verhakung des Klemmkörpers und/oder ein Schwenklager zwischen Klemmkörper und Anlagekörper vorgesehen.

Bevorzugt ist es, wenn ein Stellgetriebe oder Stellkörper, beispielsweise ein Schraubbolzen oder Stellbolzen oder Lagerbolzen, den Klemmkörper durchdringt. Vorteilhaft ist es, wenn der Stellkörper an einem mittleren Abschnitt des Klemmkörpers angeordnet ist. Vorteilhaft ist es beispielsweise, wenn Einstellkörper, zum Beispiel ein Schraubbolzen, den Klemmkörper durchsetzt, wobei der Stellkörper vom Bedienelement betätigbar ist oder einen Bestandteil des Bedienelements bildet. Das Bedienelement ist zweckmäßigerweise zur Betätigung des Stellkörpers vorgesehen.

Der Stellkörper und/oder das Bedienelement sind zweckmäßigerweise neben der Klemmstützfläche und/oder im Bereich der Anlagefläche angeordnet.

Das Bedienelement ist zweckmäßigerweise an einer von der Anlagefläche abgewandten Rückseite oder einer von der Halterung abgewandten Oberseite des Anlagekörpers angeordnet. Dadurch ist es bequem zugänglich.

Das Werkzeug kann beispielsweise ein Trennwerkzeug, Fräswerkzeug oder Bohrwerkzeug sein. Das Trennwerkzeug ist vorzugsweise ein Sägeblatt oder umfasst ein Sägeblatt. Das Trennwerkzeug kann aber auch eine Trennscheibe umfassen oder sein.

Bevorzugt ist es, wenn die Werkzeugmaschine zwei oder weitere Anlagekörper gemäß der Erfindung aufweist. Beispielweise ist es vorteilhaft, wenn an einander entgegengesetzten Seiten des Werkzeugs jeweils eine Halterung für jeweils mindestens einen Anlagekörper gemäß der Erfindung vorgesehen ist. So ist es vorteilhaft, wenn die Anlagekörper zu dem Trennwerkzeug hin oder von diesem weg verstellbar sind.

Weiterhin ist es vorteilhaft, wenn an der Maschinenbasis mindestens ein Stützteil längsverschieblich gelagert ist oder mit der Maschinenbasis mindestens ein Stützelement verbindbar ist, wobei das Stützteil eine Werkstück-Auflagefläche aufweist, die mit der Werkstück-Auflagefläche der Maschinenbasis fluchtet, sodass das Werkstück auf eine größere Fläche auflegbar ist. Die Werkstück-Auflagefläche des Stützteils befindet sich zweckmäßigerweise unterhalb oder neben der Anlagefläche des Anlagekörpers. Durch eine Längsverschieblichkeit des Anlagekörpers oder durch ein Umpositionieren des Anlagekörpers kann dieser auch oberhalb der Werkstück-Auflagefläche des Stützteils angeordnet werden, sodass der Anlagekörper auch im Bereich des Stützelements seine Werkstück-Anlagefläche bereitstellen kann.

Die Werkzeugmaschine ist zweckmäßigerweise eine mobile, jedoch stationär einsetzbare Werkzeugmaschine. Insbesondere ist es vorteilhaft, wenn die Werkzeugmaschine zwar transportierbar ist, d.h. ein Gewicht von weniger als 60-80 kg aufweist, für einen Sägebetrieb oder eine sonstige Bearbeitung des Werkstücks aber auf einem Untergrund abgestellt werden kann. Das Werkstück wird zweckmäßigerweise bezüglich der Werkzeugmaschine ortsfest gehalten, während der Trennschnitt oder Sägeschnitt oder eine sonstige Werkstückbearbeitung, beispielsweise eine Bohrung oder Fräsarbeit, durchgeführt wird.

Eine bevorzugte Ausführungsform der Erfindung sieht vor, dass die Werkzeugmaschine eine Tischkreissäge, eine Kappsäge, eine Zugsäge oder eine Kapp-Zug-Säge ist. Insbesondere ist es vorteilhaft, wenn die Werkzeugmaschine eine Sägemaschine für einen halbstationären Betrieb ist, d.h. dass sie beispielsweise auf Baustellen mitgenommen und dort betrieben werden kann.

Vorteilhaft ist vorgesehen, dass die Maschinenbasis eine Schwenkbasis aufweist, an der ein Schwenkteil um eine Schwenkachse zur Veränderung einer Relativposition der Werkzeugaufnahme für das Werkzeug, zum Beispiel ein Trennwerkzeug, und eine zum Anlegen eines Werkstücks vorgesehenen Anlagefläche schwenkbar gelagert ist. An die Anlagefläche kann das Werkstück beispielsweise seitlich oder mit seiner Unterseite angelegt werden.

Insbesondere ist es vorteilhaft, wenn das Schwenkteil und/oder die Schwenkbasis eine Auflagefläche oder Anlagefläche für das Werkstück bereitstellt. Das Schwenkteil oder die Schwenkbasis oder beide können auch eine Tragbasis für die Antriebsbaugruppe bereitstellen. Beispielweise ist die Antriebsbaugruppe an einem Träger, der vor die Auflagefläche oder Anlagefläche beim Gebrauch der Werkzeugmaschine nach oben vorsteht, angeordnet oder gehalten.

Der Antriebsmotor ist zweckmäßigerweise ein elektrischer Antriebsmotor.

Der Antriebsmotor ist vorteilhaft zu einem Drehantreiben der Werkzeugaufnahme und somit des Trennwerkzeugs vorgesehen. Es ist auch möglich, dass ein Getriebe zwischen Antriebsmotor und Werkzeugaufnahme vorgesehen ist, beispielsweise zu einer Drehzahlveränderung und/oder in Gestalt eines Winkelgetriebes und/oder zur Erzeugung einer oszillierenden Bewegung des Trennwerkzeugs.

Vorteilhaft ist die Werkzeugaufnahme, insbesondere die Antriebsbaugruppe als Ganzes, um eine Kapp-Schwenkachse anhand eines Kapp-Schwenklagers zu einer Auflagefläche für das Werkstück hin und von der Auflagefläche weg schwenkbar. Die Kapp-Schwenkachse verläuft bei Gebrauch der Werkzeugmaschine vorzugsweise horizontal. Die Werkzeugmaschine kann dann z.B. eine Kappsäge sein.

Ein vorteilhaftes Konzept, insbesondere bei einer Ausgestaltung der Werkzeugmaschine als Zugsäge oder als Kapp-Zug-Säge sieht vor, dass die Antriebsbaugruppe bezüglich der Schwenkbasis an einer Linearführung zur Durchführung von Längsschnitten mit dem Trennwerkzeug entlang einer Längsachse linear gelagert ist. Die Linearführung umfasst beispielsweise mindestens einen langgestreckten Führungskörper, insbesondere eine Führungsstange oder einen Führungsstab, welcher sich entlang der Längsachse erstreckt. Der mindestens eine langgestreckte Führungskörper, insbesondere die Führungsstange oder der Führungsstab, kann relativ zu der Maschinenbasis der Werkzeugmaschine beweglich sein. Beispielsweise ist dann an einem turmartigen Träger, eine Lageraufnahme für den mindestens einen langgestreckten Führungskörper vorgesehen. Es ist auch möglich, dass der langgestreckte Führungskörper ortsfest an der Maschinenbasis angeordnet ist. Insbesondere ist es bevorzugt, wenn die Antriebsbaugruppe in der Art eines Schlittens relativ zu der Maschinenbasis, insbesondere an einem Träger, der vor die Maschinenbasis nach oben vorsteht, linear beweglich gelagert ist. An dem Schlitten ist zweckmäßigerweise das Kapp-Schwenklager vorgesehen.

Bevorzugt ist es, wenn die Antriebsbaugruppe bezüglich der Maschinenbasis um eine Schräg-Schwenkachse rechtwinkelig anhand eines Schräg-Schwenklagers bezüglich der Maschinenbasis schwenkbar gelagert ist. Somit können beispielsweise Gehrungsschnitte oder Schrägschnitte in das Werkstück durchgeführt werden.

Eine Kombination beider vorgenannter Maßnahmen sieht vor, dass die Antriebsbaugruppe einerseits linear beweglich und andererseits schrägschwenkbar bezüglich der Maschinenbasis gelagert ist. Es ist vorteilhaft, dass ein Träger für die Antriebsbaugruppe anhand des Schrägstelllagers bezüglich der Maschinenbasis um eine Schrägschwenkachse schwenkbar ist und an dem Träger die Linearführung für die Antriebsbaugruppe vorgesehen ist. Beispielsweise steht der mindestens eine lang gestreckte oder stangenartige Führungskörper vor den Träger vor und erstreckt sich insbesondere oberhalb einer Auflagefläche für das Werkstück.

Nachfolgend wird ein Ausführungsbeispiel der Erfindung anhand der Zeichnung erläutert. Es zeigen:

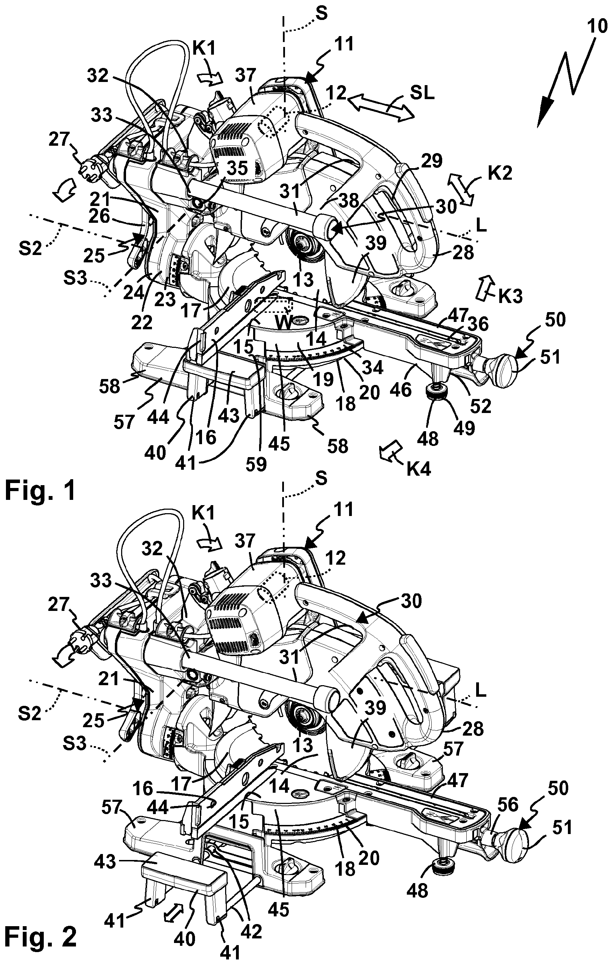

- Figur 1: eine perspektivische Schrägansicht auf eine Werkzeugmaschine in Gestalt einer Zug-Kappsäge,
- Figur 2: die Werkzeugmaschine gemäß Figur 1, mit Stützteilen, die von einer Maschinenbasis weg verstellt sind,

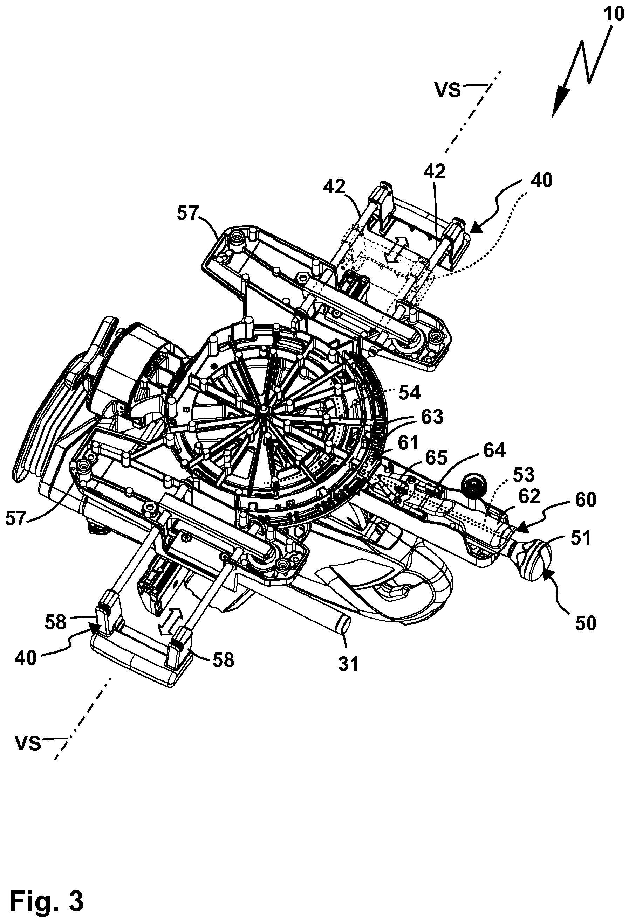

- Figur 3: die Werkzeugmaschine gemäß Figur 2 von schräg unten,

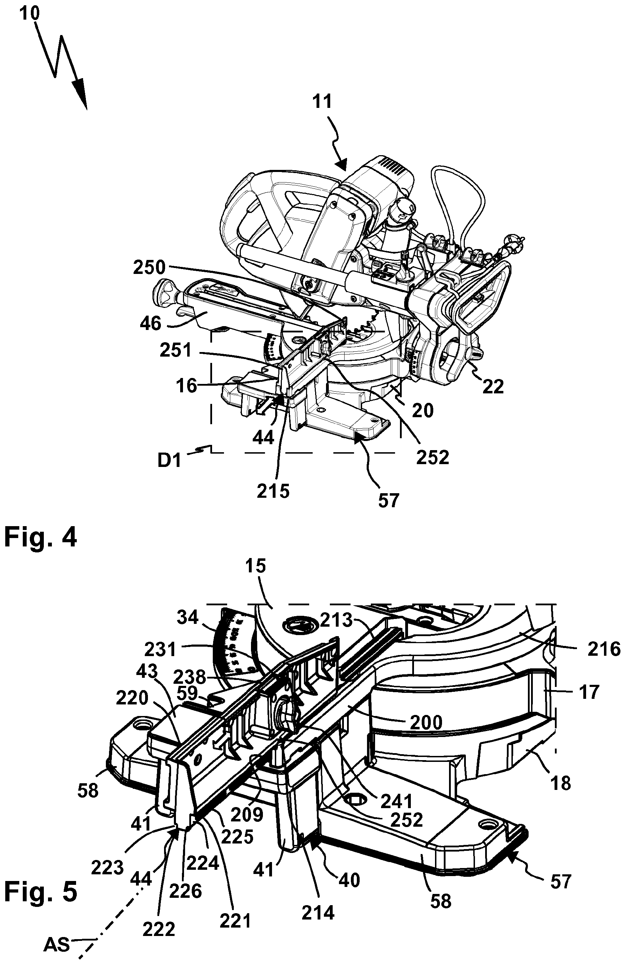

- Figur 4: eine perspektivische Ansicht auf die Werkzeugmaschine von schräg hinten oben, wobei ein Anschlagkörper näher zum Werkzeug der Werkzeugmaschine hin verstellt ist,
- Figur 5: ein Detail D1 der Werkzeugmaschine gemäß Figur 4, wobei jedoch der Anschlagkörper weiter vom Werkzeug weg verstellt ist,
- Figur 6: eine Seitenansicht der Werkzeugmaschine gemäß vorstehender Figuren,
- Figur 7: einen Schnitt durch die Werkzeugmaschine gemäß Figur 6 entlang einer Schnittlinie A-A in Figur 6,
- Figur 8: ein Detail D2 aus Figur 7 zur Veranschaulichung einer Klemmeinrichtung, und
- Figur 9: eine Variante der Werkzeugmaschine gemäß vorstehender Figuren mit einer alternativen Klemmeinrichtung, in einer Darstellung etwa entsprechend dem Detail D2 aus Figur 7.

Eine Werkzeugmaschine 10 ist z.B. als eine Kappsäge ausgestaltet. Eine Antriebsbaugruppe 11 der Werkzeugmaschine 10 umfasst einen Antriebsmotor 12, welcher direkt oder über ein nicht dargestelltes Getriebe eine Werkzeugaufnahme 13 antreibt, an der ein Trennwerkzeug 14, beispielsweise ein Sägeblatt, lösbar anordenbar ist. Der Antriebsmotor 12 ist ein elektrischer Antriebsmotor, insbesondere ein bürstenloser Antriebsmotor.

Die Antriebsbaugruppe 11 ist oberhalb einer Auflagefläche 15 zum Auflegen eines Werkstücks W angeordnet. Das Werkstück W kann auf die Auflagefläche 15 aufgelegt und an eine Anlagefläche 16 angelegt werden, um einen Trennschnitt anhand des Trennwerkzeugs 14 durchzuführen.

Die Auflagefläche 15 ist an einem Schwenkteil 17 vorgesehen, welches relativ zu einer Schwenkbasis 18 um die Schwenkachse S schwenkbar ist. Die Schwenkbasis 18 bildet eine Maschinenbasis 20.

Eine Winkelstellung der Werkzeugaufnahme 13 und somit des Trennwerkzeugs 14 relativ zu der Anlagefläche 16 ist durch eine Verschwenkung der Antriebsbaugruppe 11 um eine Schwenkachse S verstellbar, so dass Trennschnitte in unterschiedlichen Winkeln, insbesondere Gehrungswinkeln, in das Werkstück W eingebracht werden können.

Die Antriebsbaugruppe 11 ist an einem Träger 21 gehalten, welcher in der Gebrauchslage nach oben vor das Schwenkteil 17 vorsteht.

Der Träger 21 ist mit dem Schwenkteil 17 verbunden. Eine Variante kann vorsehen, dass der Träger 21 unbeweglich fest mit dem Schwenkteil 17 verbunden ist, so dass das Trennwerkzeug 14 in einem festen Winkel, insbesondere rechtwinkelig zu der Anlagefläche 16 und der Auflagefläche 15 orientiert ist. Eine bevorzugte Ausführungsform sieht jedoch vor, dass der Träger 21 über ein Schrägschwenklager 22 an dem Schwenkteil 17 um eine Schrägstellachse S2 schwenkbar gelagert ist, sodass auch schräge Schnitte in das Werkstück W einbringbar sind.

Das Schrägschwenklager 22 weist beispielsweise ein Lagerteil 23 auf, welches am Schwenkteil 21 angeordnet ist, insbesondere an einem Schwenkteil-Körper 19 des Schwenkteils 17, sowie ein Lagerteil 24 am Träger 21, die durch ein nicht dargestelltes Lagerachselement miteinander drehbar verbunden sind. Die Lagerteile 23, 24 sind relativ zueinander fixierbar, wobei von einer Fixiereinrichtung 25 lediglich ein Handgriff 26 dargestellt ist. Mithilfe des Handgriffs 26 ist der Träger 21 bezüglich der Schrägschwenkachse S2 an dem Schwenkteil 17 drehfest fixierbar. Dazu wird beispielsweise das in der Zeichnung nicht dargestellte Lagerachselement durch den Handgriff 26 entlang seiner Längsachse betätigt, um die Lagerteile 23, 24 gegeneinander zu verspannen, zu verrasten oder dergleichen. An dem Schrägschwenklager 22 kann auch ein Stellgetriebe zur Einstellung einer Schrägstellposition der Werkzeugaufnahme 13 relativ zur Auflagefläche 15 vorgesehen sein (nicht dargestellt), z.B. eine Stellgetriebe wie in DE 10 2006 059 751 A1 erläutert.

Die Werkzeugmaschine 10 kann zur Energieversorgung des Antriebsmotors 12 einen Anschluss für einen nicht dargestellten Energiespeicher, beispielsweise einen Akkupack und/oder - wie in der Zeichnung dargestellt - einen Netzanschluss 27, beispielsweise ein Netzkabel, zum Anschluss an ein elektrisches Energieversorgungsnetz, beispielsweise 110 V bis 240 V Wechselstrom, aufweisen.

Am Träger 21 könnte die Antriebsbaugruppe 11 unverschieblich gelagert sein. Vorliegend ist jedoch eine Linearführung 30 für die Antriebsbaugruppe 11 vorgesehen, welche Führungskörper 31, beispielsweise Führungsstäbe, aufweist, an denen ein Schlitten 32 entlang einer Längsachse L linear verschieblich gelagert ist. Der Schlitten 32 weist beispielsweise Führungsaufnahmen 33 auf, die von den Führungskörpern 31 durchdrungen sind. Somit kann die Antriebsbaugruppe 11 entlang der Längsachse L verstellt werden, so dass die Werkzeugmaschine 10 die Funktion einer Zugsäge realisiert. Eine Stellbewegung entlang der Längsachse L ist mit einem Pfeil SL in der Zeichnung angedeutet.

Zur Realisierung einer Kapp-Funktion ist die Werkzeugaufnahme 13, insbesondere die Antriebsbaugruppe 11 als Ganzes, anhand eines Kapp-Schwenklagers 35 um eine Kapp-Schwenkachse S3 an dem Schlitten 32 schwenkbar gelagert. Somit kann das Trennwerkzeug 14 um die Kapp-Schwenkachse S3 von der Auflagefläche 15 und somit vom Werkstück W weg oder zur Auflagefläche 15 und somit zum Werkstück W hin geschwenkt werden, was in der Zeichnung durch Pfeile K1, K2 angedeutet ist. Der Bediener greift dazu zweckmäßigerweise die Antriebsbaugruppe 11 an einem Handgriff 28, an dem vorzugsweise auch ein Antriebschalter 29 zum Einschalten und Ausschalten des Antriebsmotors 12 vorgesehen ist.

Die Antriebsbaugruppe taucht beim Schwenken zur Auflagefläche 15 hin zwischen den Führungskörpern 31 durch, wobei das Trennwerkzeug 14 in einen Schlitz 36 am Schwenkteil 17 eintauchen kann.

Wenn die Werkzeugmaschine 10 auf einem ebenen Untergrund abgestellt ist, verläuft die Schwenkachse S vertikal, während die Schwenkachsen S2 und S3 horizontal verlaufen. Die Schwenkachsen S, S2 und S3 sind zueinander rechtwinkelig.

Der Antriebsmotor 12 ist vorzugsweise in einem Motorgehäuse 37 aufgenommen. Für das Trennwerkzeug 14 weist die Antriebsbaugruppe 11 vorzugsweise eine obere Abdeckung 38 sowie eine verstellbare Abdeckung 39 auf, sodass in der Regel nur der in den Schlitz 36 eintauchende Abschnitt und der dem Träger 21 zugewandte Abschnitt des Trennwerkzeugs 14 frei ist.

Vor die Maschinenbasis 20 oder Schwenkbasis 18 stehen seitlich Fußteile 57 vor, deren Füße 58 zum Abstellen auf einem Untergrund vorgesehen sind. Die Fußteile 57 weisen zweckmäßigerweise Auflageflächen 59 auf, die in einer Ebene mit der Auflagefläche 15 des Schwenkteils 17 liegen. Die Fußteile 57 sind mit der Schwenkbasis 18 vorzugsweise fest verbunden, insbesondere einstückig mit derselben.

An den Fußteilen 57 sind Anlagekörper 44 gehalten, die die Anlagefläche 16 bereitstellen. Die beiden Anlagekörper 44 erstrecken sich bis zu den Flachseiten des Trennwerkzeugs 14, erstrecken sich also auch oberhalb der Auflagefläche 15 des Schwenkteils 17. Die Anlagekörper 44 sind beispielsweise plattenartig oder durch Platten gebildet.

Die Auflagefläche 15 kann durch seitlich an der Schwenkbasis 18 oder Maschinenbasis 20 angeordnete Stützteile 40 vergrößert werden. Die Stützteile 40 weisen beispielsweise Stützfüße 41 zum Abstellen auf einem Untergrund auf. Die Stützausleger 40 sind anhand von Führungselementen 42 bezüglich der Schwenkbasis 18 verschieblich gelagert, insbesondere linear entlang einer Linearachse VS. Vorzugsweise ist vorgesehen, dass die Stützteile 40 von der Schwenkbasis 18 oder der Maschinenbasis 20 nicht entfernbar sind, wobei eine Entfernbarkeit auch möglich ist. Die Stützteile 40 weisen zweckmäßigerweise Auflageflächen 43 auf, die in einer Ebene mit der Auflagefläche 15 des Schwenkteils 17 liegen.

Vor einen beispielsweise etwa flach zylindrischen Schwenkteil-Grundkörper 45 des Schwenkteils 17 steht ein Betätigungsarm 46 nach radial außen vor. Der Betätigungsarm 46 weist zweckmäßigerweise eine mit der Auflagefläche 15, die am Schwenkteil-Grundkörper 45 vorgesehen ist, verbundene und in gleicher Ebene liegende Auflagefläche 47 auf. Der Schlitz 36 erstreckt sich von der Auflagefläche 15 in die Auflagefläche 47 hinein. Der Betätigungsarm 46 ist weiterhin mit einer Stütze 48 auf einem Untergrund abgestützt. Die Stütze 48 ist zweckmäßigerweise einstellbar und umfasst eine entsprechende Stellschraube 49.

Ein Bediener kann den Betätigungsarm 46 ergreifen, um das Schwenkteil 17 und somit die Antriebsbaugruppe 11 mit der Werkzeugaufnahme 13 um die Schwenkachse S schwenken, was durch Pfeile K2 und K3 angedeutet ist.

Eine Skala 34 an der Schwenkbasis 18 ermöglicht es, einen entsprechenden Stellwinkel oder Schwenkwinkel des Schwenkteils 17 relativ zur Schwenkbasis 18 abzulesen.

Das Schwenkteil 17 und somit die Antriebsbaugruppe 11 ist in verschiedenen Drehwinkelstellungen bezüglich der Schwenkachse S relativ zur Schwenkbasis 18 fixierbar, wozu beispielsweise eine Klemmeinrichtung 50 vorgesehen ist. Die Klemmeinrichtung 50 umfasst eine Klemm-Betätigungshandhabe 51, beispielsweise einen Drehknauf. Die Klemm-Betätigungshandhabe 51 steht beispielsweise vor einen freien Endbereich eines Armkörpers 52 des Betätigungsarms 46 vor, sodass ein Bediener die Klemm-Betätigungshandhabe 51 leicht ergreifen kann, um das Schwenkteil 17 bezüglich der Schwenkbasis 18 zu schwenken. Weiterhin kann der Bediener beispielsweise mit seiner Handinnenfläche die Klemm-Betätigungshandhabe 51 umgreifen und somit drehbetätigen, um die Klemmeinrichtung 50 zwischen einer das Schwenkteil 17 bezüglich der Schwenkbasis 18 klemmenden Klemmstellung und einer Freigabestellung zu verstellen, in der das Schwenkteil 17 bezüglich der Schwenkbasis 18 um die Schwenkachse S verstellt werden kann.

Beispielsweise steht ein stabförmiges Klemmelement 53, das sich in Längsrichtung des Betätigungsarms 46 erstreckt, mit einem freien Endbereich zu einer Klemmkontur 54 der Schwenkbasis 18 vor. Das Klemmelement 53 kann beispielsweise in ein bezüglich des Betätigungsarms 46 ortsfestes Gewinde, beispielsweise an einer Mutter, eingeschraubt und aus dem Gewinde ausgeschraubt werden, wobei das Klemmelement 53 aus einer Klemmstellung in eine Freigabestellung und umgekehrt entlang seiner Längsachse verstellt wird. In der Klemmstellung ist das freie Ende des Klemmelements 53, dessen Stirnseite, gegen die Klemmkontur 54 geklemmt oder gedrückt, in der Freigabestellung von der Klemmkontur 54 beabstandet. Das Klemmelement 53 ist im Bereich der Klemm-Betätigungshandhabe 51 in einem Lagerkörper 56 drehbar gelagert. Der Lagerkörper 56 hat eine beispielsweise zylindrische Gestalt. Der Lagerkörper 56 hat eine Lageraufnahme 57, die vom Klemmelement 53 durchdrungen ist.

Mit der Klemmeinrichtung 50 ist eine quasi stufenlose Drehwinkel-Einstellung des Schwenkteils 17 relativ zur Schwenkbasis 18 möglich. Für einen schnellen Arbeitsbetrieb, bei dem vorbestimmte Drehwinkelpositionen des Schwenkteils 17 bezüglich der Schwenkbasis 18 bzw. vorbestimmte Drehwinkelpositionen des Trennwerkzeugs 14/der Werkzeugaufnahme 13 relativ zur Anlagefläche 16 einzustellen sind, erweist sich die nachfolgend erläuterte Rasteinrichtung 60 schnell und effektiv.

Die Rasteinrichtung 60 umfasst ein Rastelement 61, z.B. einen Rastvorsprung, welches anhand eines Betätigungselements 62 außer Eingriff mit Rastgegenkonturen 63 an der Schwenkbasis 18 gebracht werden kann und dann eine Lösestellung einnimmt oder in Eingriff mit einer der Rastgegenkonturen 63 ist, sodass das Schwenkteil 17 bezüglich der Schwenkbasis 18 verrastet und drehfest fixiert ist. Die Rastgegenkonturen 63, z.B. Rastvertiefungen, erstrecken sich bogenförmig um die Schwenkachse S. Die Rastgegenkonturen 63 sind an einer Unterseite der Schwenkbasis 18, also an einer Unterseite der Maschinenbasis 20 vorgesehen. Das Rastelement 61 ist durch eine Federanordnung 65 in eine Raststellung, also in Eingriff mit einer der Rastgegenkonturen 63, belastet.

Das Betätigungselement 62 ist als ein Betätigungshebel ausgestaltet, welcher an einem Betätigungselement-Lager 64 schwenkbar gelagert ist. Ein Griffabschnitt am einen Endbereich des Betätigungselements 62 ist nahe bei der Klemm-Betätigungshandhabe 51 angeordnet, ist also vom Bediener mit einer Hand zu ergreifen und kann in Richtung der Klemm-Betätigungshandhabe 51 geschwenkt werden, so dass das Betätigungselement 62 mit seinem vom Griffabschnitt entfernten Endbereich das Rastelement 61 in eine Lösestellung, also außer Eingriff mit einer der Rastgegenkonturen 63 bringt.

Prinzipiell denkbar wäre eine Konfiguration, bei der die Anlagekörper 44 fest mit der Maschinenbasis 20 verbunden sind. Bevorzugt ist jedoch, wenn die Anlagekörper 44 lösbar verbindbar mit Halterungen 200 sind, die an einander entgegengesetzten Seiten der Antriebsbaugruppe 11 und somit des Werkzeugs 14 vorgesehen sind. Zudem ist zweckmäßig, dass die Anlagekörper 44 in unterschiedlichen Abständen zu dem Trennwerkzeug oder Werkzeug 14 an den Halterungen 200 befestigbar sind, sodass die Anlagefläche 16 variabel konfigurierbar ist.

Beispielsweise ist einerseits der Antriebsbaugruppe 11 ein Anschlagkörper 44A und andererseits ein Anschlagkörper 44B vorgesehen, die an Halterungen 200A und 200B lösbar befestigbar und insbesondere verschieblich gelagert sind. Nachfolgend werden jedoch vereinfachend die Halterungen 200A und 200B als Halterung 200 und der Anschlagkörper 44A und 44B als Anschlagkörper 44 bezeichnet.

Die Halterungen 200 sind an Befestigungsvorsprüngen 202 gehalten, die vor die Fußteile 57 nach oben vorstehen. Die Halterungen 200 sind beispielsweise durch ein bogenförmiges, sich um die Auflage 15 des Schwenkteils 17 herum erstreckendes Verbindungselement 216 miteinander verbunden. Die Halterungen 200 könnten aber auch Einzelkomponenten darstellen, die nicht miteinander verbunden sind. Die Befestigungsvorsprünge 202 greifen in Befestigungsaufnahme 201 der Halterungen 20 ein und sind mit diesen fest verbunden, zum Beispiel mit diesen verschraubt, verklebt oder verschweißt. Ohne weiteres denkbar wäre auch eine Konfiguration, bei der eine jeweilige Halterung 200 einen integralen Bestandteil, insbesondere einen einstückigen Bestandteil der Maschinenbasis 20 bildet.

Die Befestigungsaufnahmen 201 sind zwischen Stützschenkeln 204, 205 einerseits und andererseits einem Stützvorsprung 203 der Halterung 200 gebildet, der in einen Zwischenraum zwischen die Befestigungsvorsprünge 202 eingreift. Mithin ist also eine jeweilige Halterung 200 formschlüssig mit der Maschinenbasis 20, vorliegend einen jeweiligen Fußteil 57, verbunden.

An einer der Auflagefläche 15 zugewandten Seite weisen die Halterungen 200 jeweils eine Stationär-Anlagefläche 206 auf, an der das Werkstück W anschlagen kann. Die Anschlagflächen 16 verlängern die Stationär-Anlageflächen 206 in der Gebrauchslage der Werkzeugmaschine 10 nach oben und zur Seite hin. Jedenfalls fluchten die Anschlagflächen 16 mit der jeweiligen Stationär-Anlagefläche 206, was durch das nachfolgend erläuterte Befestigungskonzept der Anlagekörper 44 an den Halterungen 200 vorteilhaft realisiert ist. Jedenfalls können die Werkstücke W plan anliegend an den Stationär-Anlageflächen 206 zudem an der jeweiligen Anschlagfläche 16 anliegen.

Die Anschlagflächen 16 sind an Anlageabschnitten 220 der Anlagekörper 44 vorgesehen. Neben den Anlageabschnitten 220 befinden sich Klemmabschnitte 221, die zur Verbindung mit den Halterungen 200 vorgesehen sind. Die Klemmabschnitte 221 sind an Klemmvorsprüngen 222 vorgesehen oder weisen diese auf, welche in Klemmaufnahmen 207 der Halterungen 200 eingreifen. Dann liegen Klemmstützfläche 223 an Klemmanlagebereichen 217 von Klemmanlageflächen 208 der Klemmaufnahmen 207 an.

Die Klemmaufnahmen 207 weisen einen im Wesentlichen U-förmigen Querschnitt auf. Den Klemmanlagefläche 208 gegenüberliegend ist eine Klemmwiderlagerfläche 209 vorgesehen. Die Klemmanlagefläche 208 und die Klemmwiderlagerfläche 209 erstrecken winkelig sich von einem Boden 201 der Klemmaufnahme 207 weg.

Am freien Endbereich oder dem Boden 210 gegenüberliegend ist eine Einstecköffnung 218 vorgesehen, in die der Klemmvorsprung 222 des Anlagekörpers 44 einsteckbar ist.

Dann liegt an der Klemmanlagefläche 208, insbesondere dem Klemmanlagebereich 217, die Klemmstützfläche 223 an. Der Klemmstützfläche 223 gegenüberliegend ist eine Stützfläche 224 am Klemmvorsprung 222 vorgesehen, der sich an der Klemmwiderlagerfläche 209 abstützt.

Sowohl die Klemmaufnahme 208 als auch der Klemmvorsprung 222 weisen eine Längsgestalt auf und erstrecken sich entlang einer Längsachse AS. Die Längsachse AS ist zu der Längsachse VS parallel. Somit bilden die Klemmaufnahme 208 und der Klemmvorsprung 222 einen Führungsvorsprung und eine Führungsaufnahme. Der Klemmvorsprung 222 kann in der Klemmaufnahme 207 entlang der Längsachse AS verschoben werden, sodass auf diese Weise der Abstand der Anlagefläche 16 des Anlagekörpers 44 zur Werkzeugaufnahme 13 und mithin zum Werkzeug 14 einstellbar ist. Weiterhin kann die Anlagefläche 16 eines Anlagekörpers 44 von der Werkzeugaufnahme 13 weg zu den Stützteilen 40 hin verstellt werden, sodass auch oberhalb von deren Auflageflächen 43 für das Werkstück W zumindest ein Abschnitt der Anlagefläche 16 zur Abstützung und Anlage des Werkstücks W bereitsteht. Insoweit ist also eine komfortable Bedienung möglich.

Dabei ist zu bemerken, dass zwischen den Führungsaufnahmen bzw. Klemmaufnahmen 207 und den Führungsvorsprüngen bzw. Klemmvorsprüngen 222 ein relativ großes Bewegungsspiel vorhanden ist, so dass die Anlagekörper 44 in den Längsführungen oder Führungsaufnahmen (den Klemmaufnahmen 207) leicht beweglich gelagert sind. Selbst Verschmutzungen durch Sägespäne, Sägemehl oder dergleichen sind dabei kaum störend, weil das Bewegungsspiel entsprechend groß ist.

Eine vorteilhafte Maßnahme sieht ferner vor, dass an der Klemmstützfläche 223 und oder der Stützfläche 224 Aussparungen 225 vorgesehen sind, in die hinein Schmutz, Sägespäne, Sägemehl oder dergleichen gelangen kann, so dass die Klemmstützfläche 223, 224 für eine Planlage an den stationären Flächen, der Klemmanlagefläche 208 und der Klemmwiderlagerfläche 209 sozusagen freigehalten werden können. Die Aussparungen 225 können leicht gereinigt werden, indem beispielsweise die Anlagekörper 44 von den Halterungen 200 entfernt und ausgebürstet oder ausgeklopft werden.

Die Längsverschieblichkeit der Anlagekörper 44 in den Führungsaufnahmen oder Klemmaufnahmen 207 ist zum Beispiel durch einen Längsanschlag 226 am jeweiligen Anlagekörper 44 begrenzt, welcher beim Verstellen des Anschlagkörpers 44 zur Werkzeugaufnahme 13 hin am Körper der Halterung 200 oder an einer sonstigen Stelle der Maschinenbasis 20 anschlägt.

Weiterhin ist es zweckmäßig, wenn bei der Führungsaufnahme der Klemmaufnahme 207 ein Längsanschlag 214 vorgesehen ist, der die Bewegung eines Anlagekörpers 44 vom Trennwerkzeug 14 weg begrenzt. Am Längsanschlag 214 schlägt beispielsweise ein Anschlagvorsprung 252 an, der seitlich vor den Anlagekörper 44 vorsteht.

Die Anlagekörper 44 können durch seitliche Öffnungen 215 oder die Einstecköffnung oder obere Öffnung 218 in die Klemmaufnahmen 207 oder Führungsaufnahmen eingeführt werden.

Prinzipiell denkbar wäre es, dass die Anlagekörper 44 an einer Oberseitenfläche 212 der Halterungen 200 abgestützt sind. Vorliegend ist jedoch die freie Stirnseite oder Fläche zwischen der Klemmstützfläche 223 und der Stützfläche 224 des Klemmvorsprungs 222 zum Abstützen am Boden 210 der Halterung 200 vorgesehen. Am Boden 210 ist ferner noch eine Vertiefung 219 vorhanden, die das Bewegungsspiel eines jeweiligen Anlagekörpers 44 in der Führungsaufnahme oder Klemmaufnahme 207 entlang der Längsachse AS verbessert, indem beispielsweise Späne oder dergleichen anderer Schmutz in die Vertiefung 219 eindringen kann und/oder die Kontaktfläche zwischen dem Anlagekörper 44 und dem Boden 210 bzw. der Halterung 200 verkleinert ist.

Es kann aber auch vorgesehen sein, dass beispielsweise Stützflächen 227, die seitlich neben dem Klemmvorsprung 222 vorgesehen sind, an der Oberseitenfläche 212 abgestützt, insbesondere geführt, sind.

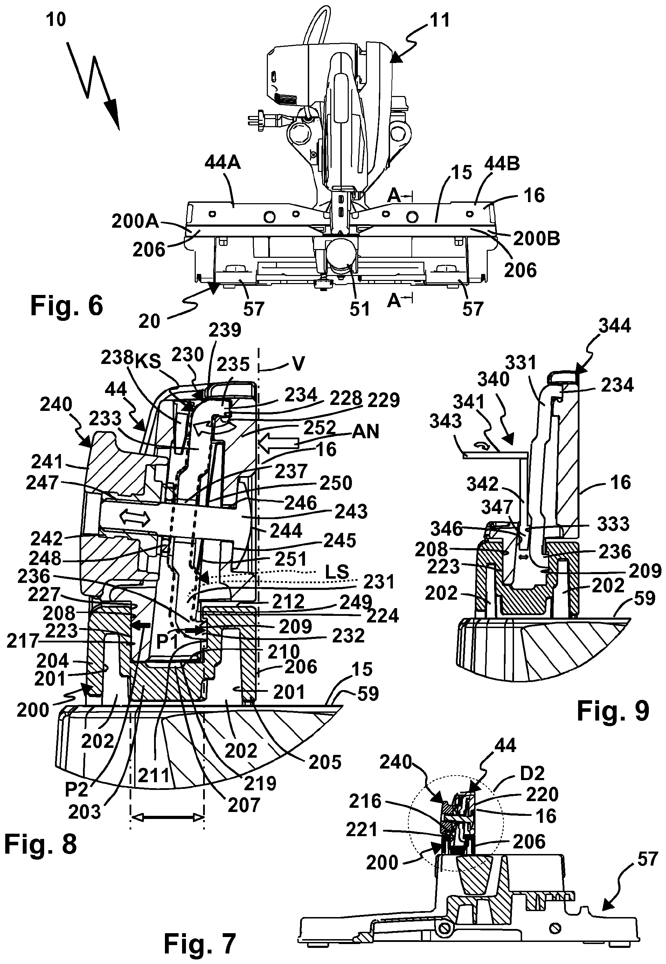

Wenn jedoch der Anlagekörper 44 an der Halterung 200 ortsfest befestigt oder geklemmt ist, sind bevorzugt andere, zur Auflagefläche 15 winkelige und/oder nicht-parallele Kontaktflächen von Halterung 200 und Anlagekörper 44 in Kontakt miteinander, um eine Planlage oder fluchtende Lage der Anlagefläche 16 mit der Stationär-Anlagefläche 206 zu realisieren:
Zur ortsfesten Festlegung eines Anschlagkörpers 44 an der Halterung 200 sind Klemmeinrichtungen 230 vorgesehen. Die Klemmeinrichtungen 230 umfassen jeweils einen Klemmkörper 231, welcher durch eine Stelleinrichtung 240 zwischen einer in Figur 8 in durchgezogenen Linien dargestellten Klemmstellung KS und einer in Figur in gestrichelten Linien dargestellten Lösestellung LS verstellbar ist.

Die Klemmkörper 231 sind in Aufnahmen 239 der Anschlagkörper 44 aufgenommen. Die Klemmkörper 231 sind in den Aufnahmen 239 zwischen der Klemmstellung KS und der Lösestellung LS beweglich gelagert.

In der Klemmstellung KS drückt ein Klemmabschnitt 232 des Klemmkörpers 231 gegen die Klemmwiderlagerfläche 209, was durch einen Kraftpfeil P1 in Figur 8 dargestellt ist. Dadurch wird die Klemmstützfläche 223 gegen den Klemmanlagebereich 217 mit einer Klemmkraft P2 beaufschlagt. Die Klemmstützfläche 223 und der Klemmanlagebereich 227 verlaufen senkrecht zur Auflagefläche 15 und vorliegend parallel zur Anlagefläche 16. Die Klemmkraft P2 verläuft parallel zur Auflagefläche 15 und senkrecht zur Anlagefläche 16. Somit ist die Klemmkraft P2 optimal.

Die Klemmanlagefläche 208, insbesondere der Klemmanlagebereich 217, sind sozusagen stufig zurückversetzt hinter die Stationär-Anlagefläche 206 und zu dieser parallel. Ebenfalls versetzt und parallel zueinander, jedoch voneinander abgewandt, sind die Klemmstützfläche 223 und die Anlagefläche 16. Zum einen ermöglicht diese Ausbildung und Anordnung von sich aneinander abstützen Flächen bzw. Anlageflächen für das Werkstück eine einfache maschinelle Herstellung, zum andern auch eine exakte Planlage. Man erkennt in Figur 8 beispielsweise, dass die Anlagefläche 16 des an der Halterung 200 befestigten Anlagekörpers 44 mit der Stationär-Anlagefläche 206 exakt fluchtet oder in einer gemeinsamen Vertikalebene V liegt, sodass das Werkstück W plan parallel an beide Anlageflächen 16, 206 angelegt werden kann, z.B. mit einer Anlage-Normalkraft AN.

Die Anlagekraft AN weist zweckmäßigerweise in dieselbe Richtung wie die Klemmkraft P2, wirkt also im Sinne einer Kraftverstärkung.

In der Klemmstellung KS ist es bevorzugt, wenn der Anlagekörper 44 ausschließlich mit der Klemmstützfläche 223 an der Klemmanlagefläche 208, insbesondere am Klemmanlagebereich 217, flächig anliegt und zudem der Klemmkörper 223 mit dem Klemmabschnitt 232 an der Klemmwiderlagerfläche 209 abgestützt ist. Weitere Flächen der Halterung 200 und des Anlagekörpers 44, die möglicherweise die fluchtende Ausrichtung der Anlagefläche 16 mit der Stationär-Anlagefläche 206 beeinflussen können, sind vorzugsweise nicht in Kontakt miteinander.

In der Klemmstellung KS und vorzugsweise auch der Lösestellung LS sind ferner ein Hakenabschnitt 234 mit einer Hakenaufnahme 228 des Anlagekörpers 44 in Eingriff. Dadurch ist der Klemmkörper 231 mit dem Anlagekörper 44 sozusagen verhakt. Die Hakenaufnahme 228 ist beispielsweise an einem Hakenvorsprung 229 ausgebildet, der zur Klammer oder zum Klemmkörper 231 vorsteht. Die Hakenaufnahme 228 und der Hakenabschnitt 234 bilden jeweils Hakenkonturen.

Beispielsweise ist der Hakenabschnitt 234 an einem Vorsprung 235 vorgesehen, welcher ebenso wie ein weiterer Vorsprung 236 vor einen Betätigungsabschnitt 233 des Klemmkörpers 231 vorsteht. Der Vorsprung 236 weist den Betätigungsabschnitt 233 auf oder bildet denselben. Die Vorsprünge 236, 235 bilden zusammen mit dem Betätigungsabschnitts 233 eine klammerartige Kontur des Klemmkörpers 231, den man dementsprechend auch als eine Klammer bezeichnen könnte.

Der Vorsprung 236 bildet ebenfalls einen Hakenvorsprung. Der Vorsprung 236 greift in eine Hakenaufnahme 211 an der Klemmanlagefläche 208 ein. Der Boden der Hakenaufnahme 211 stellt den Klemmanlagebereich 217 bereit. Der Vorsprung 236 und die Hakenaufnahme 211 bilden weitere Hakenkonturen.

In der Klemmstellung KS und in der Lösestellung LS ist also der Klemmkörper 231 in der Art einer Klammer in Eingriff mit der Hakenaufnahme 211 der Halterung 200 und der Hakenaufnahme 228 des Anlagekörpers 44, sodass die beiden Komponenten durch den Klemmkörper 231 in der Art einer Klammer zusammen gehalten werden. In der Lösestellung LS jedoch ist der Anschlagkörper 44 in der Klemmaufnahme oder Führungsaufnahme 204 entlang der Längsachse AS verschieblich. Die Hakenaufnahme 211 ist zweckmäßigerweise in der Art einer Längsnut ausgestaltet, in der der Klemmabschnitt 231 entlang der Längsachse AS verschieblich ist.

Um den Anlagekörper 44 von der Halterung 200 zu entfernen, kann dieser beispielsweise aus der seitlichen Öffnung 215 herausgezogen werden. Weiterhin kann der Klemmkörper 231 über die Lösestellung LS hinaus weiter weg von der Hakenaufnahme 211 verstellt werden, sodass sein Haken-Vorsprung 236 außer Eingriff mit der Hakenaufnahme 211 gelangt und der Anschlagkörper 44 nach oben aus der Einstecköffnung 218 herausgezogen werden kann.

Zur Betätigung der Klemmkörper 231 der Anlagekörper 44 dienen die Stelleinrichtungen 240. Die Stelleinrichtungen 240 umfassen ein Bedienelement 241, beispielsweise einen Drehknauf, welches an einer von der Anlagefläche 16 abgewandten Seite des Anschlagkörpers 44 angeordnet ist. Der Drehknauf oder das Bedienelement 241 kann beispielsweise mit zwei Fingern einer Hand ergriffen und drehbetätigt werden. Dadurch wird eine Mutter 242 auf einen Spannkörper mit einer Längsgestalt, insbesondere einen Schraubbolzen 243, aufgeschraubt oder vom Spannkörper oder Schraubbolzen 243 abgeschraubt, der sich am Anlagekörper 44 abstützt. Die Mutter 244 ist drehfest mit dem Bedienelement 241 verbunden oder bildet einen integralen Bestandteil des Bedienelements 241.

Beispielsweise ist ein Kopf 244 des Schraubbolzen 243 am Anlagekörper 44, insbesondere in einer Vertiefung 245 des Anlagekörpers 44, abgestützt. Der Schraubbolzen 243 durchdringt eine Durchtrittsöffnung 246 des Anlagekörpers 44 sowie eine Durchtrittsöffnung 237 des Klemmkörpers 231 und ist mit einem Schraubabschnitt 247 in die Mutter 242 eingeschraubt.

Ein bevorzugtes Konzept sieht vor, dass der Schraubbolzen 243 und/oder die Mutter 242 anhand eines Wälzlagers 248, insbesondere eines Drehlagers, bezüglich des Anlagekörpers 44 drehbar gelagert ist/sind, sodass ein Bediener das Bedienelement 241 mit geringer Kraft drehbetätigen kann.

Wenn das Bedienelement 241 gedreht wird, wird die Mutter 242 auf den Schraubbolzen 243 zum Beispiel aufgeschraubt, sodass sie sich zur Anlagefläche 16 hin bewegt und dabei den Klemmkörper 231 in Richtung der Klemmstellung KS betätigt. Der Klemmkörper 231 schwenkt um einen Lagerbereich, der durch den Hakenabschnitt 234 oder Hakenvorsprung 235 definiert ist. Der Hakenvorsprung 235 dreht beispielsweise um den Hakenvorsprung 229, an dem er sozusagen aufgehängt ist. Dadurch wird der Klemmabschnitt 232 in Eingriff mit dem Klemmanlagebereich 217 gebracht oder mit der Klemmkraft P1 gegen den Klemmanlagebereich 217 geklemmt.

Ein Haltekörper 238 kann vorgesehen sein, um den Klemmkörper 231 in der Aufnahme 239 zu halten. Der Haltekörper 238 liegt beispielsweise dem Schwenklager, welches zwischen dem Hakenvorsprung 229 und dem Vorsprung 235 des Klemmkörpers 231 realisiert ist, gegenüber. Der Haltekörper 238 oder Stützkörper kann in der Art eines Keilkörpers oder Stützkeils oder dergleichen ausgestaltet sein, um den Betätigungskörper oder Klemmkörper 231 in der Aufnahme 239 beweglich zu halten.

Der Klemmabschnitt 232 befindet sich in einer Aussparung 249 der Stützfläche 224. Der Klemmabschnitt 232 steht auch in der Lösestellung LS vor die Stützfläche 224 vor, sodass der Anlagekörper 44 mit der Halterung 200 verhakt ist. Der Klemmabschnitt 232 kann jedoch anhand des Stellgetriebes bzw. der Stelleinrichtung 240 hinter die Stützfläche 224 zurück verstellt werden, um den Anlagekörper 44 von der Halterung 200 zu entfernen.

Nun könnte eine Variante vorsehen, dass beispielsweise die Mutter 242 oder das Bedienelement 241 mit dem Klemmkörper 231 auch in Richtung der Lösestellung LS bewegungsgekoppelt ist, zum Beispiel anhand einer entsprechenden Bewegungsmitnahme oder eines Mitnehmers, welcher mit dem Bedienelement 241 gekoppelt ist oder an diesem angeordnet ist.

Bevorzugt ist jedoch eine Federanordnung 250 vorgesehen, beispielsweise mit einer Blattfeder 251, die den Klemmkörper 231 in die Lösestellung LS belastet. Die Federanordnung 250 stützt sich beispielsweise am Klemmkörper 231, insbesondere dessen Betätigungsabschnitt 233, andererseits beispielsweise an einem Abschnitt 253 des Anlagekörpers 44 ab, an dem auch der Kopf 244 des Schraubbolzens 242 abgestützt ist.

Die Mutter 242 in Verbindung mit dem Schraubbolzen 243 bildet ein Stellgetriebe oder Betätigungsgetriebe für den Klemmkörper 231.

Vom Werkzeug 15 entferntere Bereiche 251 der Anschlagkörper 44 stehen weiter vor die Auflagefläche 15, 43,58 vor. Zum Werkzeug 15 hin haben die Anschlagkörper 44 Abschrägungen 250, das heißt dass dort die Anschlagfläche 16 niedriger ist. Dadurch ist die Sicht zum Schnittbereich oder zur Schnittkante in das Werkstück W weniger durch die Anschlagkörper 44 behindert. Vorteilhaft ist vorgesehen, dass die Klemmeinrichtungen 240 in den höheren, nicht abgeschrägten Bereichen 251 der Anschlagkörper 44 vorgesehen sind.

Ein zu der Stelleinrichtung 240 alternatives Antriebskonzept ist in Figur 9 schematisch dargestellt. Beispielsweise kann bei einem Anlagekörper 344, der ähnlich wie der Anlagekörper 44 aufgebaut ist, ein Klemmkörper 331 vorgesehen sein, der an sich dem Klemmkörper 231 ähnlich ist. Der Klemmkörper 231 weist einen Vorsprung 236 auf, welcher in Eingriff mit der Klemmwiderlagerfläche 209 gebracht werden kann, um die Klemmanlagefläche 208 mit der Klemmstützfläche 223 in Eingriff zu bringen bzw. zu verklemmen. Eine Klemmeinrichtung 340 weist neben dem Klemmkörper 331 beispielsweise ein Betätigungselement 341 auf, welches einen Handgriffarm 343 und einen Betätigungsarm 342 aufweist. Der Betätigungsarm 342 kann um seine Längsachse anhand des Handgriffarms 343 geschwenkt werden, wodurch eine bezüglich der Längsachse exzentrische Betätigungskontur 347 verdreht wird. In einer Drehstellung, die der Lösestellung LS entspricht, lässt die Betätigungskontur 347 ein Bewegungsspiel des Klemmkörpers 331 von der Klemmwiderlagerfläche 209 weg zu, in einer anderen Drehstellung, beispielsweise um 90° verdreht, drückt die Betätigungskontur 342 den Klemmkörper 331 gegen die Klemmwiderlagerfläche 209, wodurch die Klemmstützfläche 223 gegen die Klemmanlagefläche 208 geklemmt wird.

Man erkennt in Figur 9 ohne weiteres, dass in Abwandlung von der zeichnerisch dargestellten Ausführungsform die Klemmanlagefläche 208 und die Klemmstützfläche 223 ohne weiteres auch in der Zeichnung rechts, d.h. näher bei der Stationär-Anlagefläche 206 angeordnet sein können, während das Klemmelement oder der Klemmkörper 331 in die andere Richtung, d.h. von der Stationär-Anlagefläche 206 weg in die Klemmstellung K es bewegbar sein kann.

## Patentansprüche

1. Werkzeugmaschine, insbesondere halbstationäre oder mobile Werkzeugmaschine (10), zur Bearbeitung von Werkstücken (W) anhand eines Werkzeugs (14), wobei die Werkzeugmaschine (10) eine Maschinenbasis (20) zum Abstellen auf einem Untergrund aufweist, an der eine Antriebsbaugruppe (11) mit einem Antriebsmotor (12) und einer durch den Antriebsmotor (12) antreibbaren Werkzeugaufnahme (13) für das Werkzeug (14), insbesondere für ein Trennwerkzeug, und eine Halterung (200) für mindestens einen Anlagekörper (44) angeordnet sind, wobei die Maschinenbasis (20) eine Auflagefläche (15) und der mindestens eine Anlagekörper (44) eine vor die Auflagefläche (15) winkelig, insbesondere rechtwinkelig vorstehende Anlagefläche (16) für das Werkstück (W) bereitstellen, sodass das Werkstück (W) für eine Bearbeitung anhand des Werkzeugs (14) auf der Auflagefläche (15) liegend an die Anlagefläche (16) anlegbar ist, wobei der mindestens eine Anlagekörper (44) eine Klemmeinrichtung (230) zum Verklemmen mit der Halterung (200) aufweist, wobei die Klemmeinrichtung (230) ein manuell bedienbares Bedienelement (241) und einen durch das Bedienelement (241) zwischen einer Klemmstellung (KS) und einer Lösestellung (LS) betätigbaren Klemmkörper (231) aufweist, der in der Klemmstellung (KS) eine Klemmstützfläche (223) des mindestens einen Anlagekörpers (44) mit einer Klemmkraft (P2) gegen eine Klemmanlagefläche (208) der Halterung (200) spannt und in der Lösestellung (LS) freigibt, sodass der mindestens eine Anlagekörper (44) relativ zu der Halterung (200) in der Klemmstellung (KS) geklemmt und in der Lösestellung (LS) beweglich ist, und wobei die Klemmanlagefläche (208) mindestens einen sich neben der Anlagefläche (16) quer zu der Auflagefläche (15) erstreckenden Klemmanlagebereich (217) aufweist oder durch den Klemmanlagebereich (217) gebildet ist, gegen den die Klemmstützfläche (223) in der Klemmstellung (KS) mit einer zur Anlagefläche (16) rechtwinkeligen Kraftkomponente der Klemmkraft (P2) geklemmt ist, so dass die Anlagefläche (16) des Anlagekörpers (44) bezüglich des Klemmanlagebereichs (217) eine vorbestimmte Längsposition einnimmt und/oder mit einer bezüglich der Auflagefläche (15) stationären, insbesondere an der Halterung (200) angeordneten, Stationär-Anlagefläche (206) fluchtet, **dadurch gekennzeichnet, dass** die rechtwinkelige Kraftkomponente der Klemmkraft (P2) und eine Anlage-Kraft (AN), mit der das Werkstück (W) gegen die Anlagefläche (16) gedrückt wird, gleichgerichtet sind oder in die gleiche Richtung weisen und/oder dass eine Anlage-Kraft (AN), mit der das Werkstück (W) auf die Anlagefläche (16) des Anlagekörpers (44) einwirkt, im Sinne einer Kraftverstärkung der Klemmkraft (P2) wirkt.

2. Werkzeugmaschine nach Anspruch 1, **dadurch gekennzeichnet, dass** die Klemmstützfläche (223) und/oder die Klemmanlagefläche (208) und/oder der mindestens eine Klemmanlagebereich (217) zu der Anlagefläche (16) des mindestens einen Anlagekörpers (44) und/oder zu der Stationär-Anlagefläche (206) parallel ist oder eine Schrägneigung von weniger als 45°, insbesondere weniger als 30° oder 15° zur Anlagefläche (16) oder Stationär-Anlagefläche (206) aufweist.

3. Werkzeugmaschine nach Anspruch 1 oder 2, **dadurch gekennzeichnet, dass** an der Klemmstützfläche (223) und/oder Klemmanlagefläche (208) und/oder an dem Klemmanlagebereich (217) mindestens eine Vertiefung angeordnet ist und/oder dass die Klemmstützfläche (223) und/oder die Klemmanlagefläche (208) und/oder der mindestens eine Klemmanlagebereich (217) als Planflächen ausgestaltet sind und/oder sich parallel zu der Anlagefläche (16) erstrecken.

4. Werkzeugmaschine nach einem der vorhergehenden Ansprüche, **dadurch gekennzeichnet, dass** die Klemmstützfläche (223) und die Anlagefläche (16) des mindestens einen Anlagekörpers (44) eine Stufe bilden oder an einer Stufe angeordnet sind und/oder im Wesentlichen dieselbe Längslänge aufweisen und/oder in Bezug auf eine in Gebrauchslage horizontale Ebene und/oder die Auflagefläche (15) nebeneinander, insbesondere an einander entgegengesetzten Seiten der Auflagefläche (15), angeordnet sind.

5. Werkzeugmaschine nach einem der vorhergehenden Ansprüche, **dadurch gekennzeichnet, dass** Klemmstützfläche (223) und/oder der Klemmkörper (231) an einem Klemmvorsprung (222) des mindestens einen Anlagekörpers (44) vorgesehen ist.

6. Werkzeugmaschine nach einem der vorhergehenden Ansprüche, **dadurch gekennzeichnet, dass** der Klemmkörper (231) und die Klemmstützfläche (223) einander entgegengesetzt wirkend in eine, insbesondere eine Führungsaufnahme zur längsverschieblichen Führung des Anlagekörpers (44) bildende, Klemmaufnahme (207) der Halterung (200) eingreifen.

7. Werkzeugmaschine nach einem der vorhergehenden Ansprüche, **dadurch gekennzeichnet, dass** die Halterung (200) mindestens einen Führungsvorsprung oder mindestens eine Führungsaufnahme zur längsverschieblichen Lagerung des mindestens einen Anlagekörpers (44) quer zu der Auflagefläche (15) aufweist.

8. Werkzeugmaschine nach einem der vorhergehenden Ansprüche, **dadurch gekennzeichnet, dass** an der Halterung (200), insbesondere neben der Klemmanlagefläche (208), und an dem mindestens einen Anlagekörper (44) und/oder dem Klemmkörper (231) Hakenkonturen vorgesehen sind, die zumindest in der Klemmstellung (KS), vorzugsweise auch der Lösestellung (LS), ineinander eingreifen, so dass mindestens eine Anlagekörper (44) in einer Querrichtung, insbesondere einer einzigen Querrichtung, quer zu der Klemmanlagefläche (208) unverlierbar an der Halterung (200) gehalten ist und/oder parallel zu einer senkrechten Achse oder Normalenachse der Auflagefläche (15) nicht von der Halterung (200) entfernbar ist, wobei vorteilhaft vorgesehen ist, dass der Klemmkörper (231) eine erste Hakenkontur (236) zum Verhaken mit der Halterung (200) und eine zweite Hakenkontur (235) zum Verhaken mit dem mindestens einen Anlagekörper (44) aufweist, die in der Klemmstellung (KS) in Eingriff, insbesondere in der Art einer Klammer, mit Hakenkonturen des Anlagekörpers (44) und der Halterung (200) sind.

9. Werkzeugmaschine nach einem der vorhergehenden Ansprüche, **dadurch gekennzeichnet, dass** ein Klemmabschnitt des Klemmkörpers (231) neben einer Stützfläche (224) des Anlagekörpers (44), insbesondere in einer Aussparung (249) an der Stützfläche, angeordnet ist und in der Klemmstellung (KS) weiter vor die Stützfläche (224) vorsteht als in der Lösestellung (LS), wobei die Stützfläche (224) in der Klemmstellung (KS) zweckmäßigerweise von einer ihr gegenüberliegenden Flächen der Halterung (200) entfernt ist.

10. Werkzeugmaschine nach einem der vorhergehenden Ansprüche, **dadurch gekennzeichnet, dass** die Klemmeinrichtung (230) ein Stellgetriebe, insbesondere ein Schraubengetriebe und/oder Nockengetriebe und/oder Keilgetriebe und/oder Hebelgetriebe, zum Verstellen des Klemmkörpers (231) zwischen der Lösestellung (LS) und der Klemmstellung (KS) umfasst.

11. Werkzeugmaschine nach einem der vorhergehenden Ansprüche, **dadurch gekennzeichnet, dass** der Klemmkörper (231) an dem mindestens einen Anlagekörper (44) zwischen der Klemmstellung (KS) und der Lösestellung (LS) , insbesondere anhand einer mit dem Anlagekörper (44) verhakbaren Hakenkontur schwenkbar und/oder verschieblich gelagert ist und/oder dass der Klemmkörper (231) in die Klemmstellung (KS) oder Lösestellung (LS) durch eine Federanordnung belastet ist und/oder dass ein durch das Bedienelement (241) betätigbarer oder ein Bestandteil des Bedienelements (241) bildender Stellkörper, insbesondere Schraubbolzen, den Klemmkörper (231) durchsetzt.

12. Werkzeugmaschine nach einem der vorhergehenden Ansprüche, **dadurch gekennzeichnet, dass** die Klemmstützfläche (223) und die Anlagefläche (16) an einander entgegengesetzten Seiten des Anlagekörpers (44) angeordnet sind.

13. Werkzeugmaschine nach einem der vorhergehenden Ansprüche, **dadurch gekennzeichnet, dass** an einander entgegengesetzten Seiten des Werkzeugs an der Maschinenbasis (20) jeweils mindestens eine Halterung (200) für einen Anlagekörper (44) vorgesehen ist und/oder an der Maschinenbasis (20) mindestens ein Stützteil beweglich gelagert oder befestigbar ist, dass eine mit der Auflagefläche (15) der Maschinenbasis (20) fluchtende Auflagefläche (43) für das Werkstück (W) aufweist, wobei der mindestens eine Anlagekörper (44) oberhalb der Auflagefläche (15) des Stützteils (40) positionierbar ist.

14. Werkzeugmaschine nach einem der vorhergehenden Ansprüche, **dadurch gekennzeichnet, dass** die Maschinenbasis (20) eine Schwenkbasis (18) bildet, an der ein Schwenkteil (17) um eine Schwenkachse (S) zur Veränderung einer Relativposition der Werkzeugaufnahme (13) für das Werkzeug (14), insbesondere das Trennwerkzeug (14), und der zum Anlegen eines Werkstücks (W) vorgesehenen Anlagefläche (16) schwenkbar gelagert ist, wobei vorteilhaft das Schwenkteil (17) und/oder die Schwenkbasis (18) die Auflagefläche (15) für das Werkstück (W) und/oder eine Tragbasis für die Antriebsbaugruppe (11) bereitstellt und/oder zweckmäßigerweise die Halterung (200) für den mindestens einen Anlagekörpers (44) bezüglich der Schwenkbasis ortsfest ist.

15. Werkzeugmaschine nach einem der vorhergehenden Ansprüche, **dadurch gekennzeichnet, dass** die Antriebsbaugruppe (11) bezüglich der Maschinenbasis (20) an einer Linearführung (30) zur Durchführung von Längsschnitten mit dem Trennwerkzeug (14) linear gelagert ist und/oder um eine Schrägschwenkachse (S3) bezüglich der Maschinenbasis (20) schwenkbar gelagert ist und/oder anhand eines Kapp-Schwenklagers (35) zu der zum Auflegen eines Werkstücks (W) vorgesehenen Werkstück-Auflagefläche (15) hin und von dieser weg schwenkbar gelagert ist.

## Claims

1. Machine tool, in particular a semi-stationary or mobile machine tool (10), for machining workpieces (W) by means of a tool (14), wherein the machine tool (10) has a machine base (20) for placing on a ground, on which machine base (20) there are located a drive assembly (11) with a drive motor (12) and a tool holder (13) drivable by the drive motor (12) for the tool (14), in particular for a cutting tool, and a holder (200) for at least one locating body (44), wherein the machine base (20) provides a support surface (15) and the at least one locating body (44) provides a locating surface (16) projecting at an angle, in particular at right angles, in front of the support surface (15) for the workpiece (W), so that the workpiece (W) can be located at the locating surface (16) while lying on the support surface (15) for machining by means of the tool (14), wherein the at least one locating body (44) has a clamping device (230) for clamping to the holder (200), wherein the clamping device (230) has a manually operable control (241) and a clamping body (231), which can be operated by the control (241) between a clamping position (KS) and a release position (LS) and which clamps a clamping supporting surface (223) of the at least one locating body (44) against a clamping locating surface (208) of the holder (200) with a clamping force (P2) in the clamping position (KS) and releases it in the release position (LS), so that the at least one locating body (44) is clamped relative to the holder (200) in the clamping position (KS) and movable in the release position (LS), and wherein the clamping locating surface (208) has at least one clamping locating region (217) extending adjacent to the locating surface (16) transversely to the support surface (15) or is represented by the clamping locating region (217), against which clamping locating region (217) the clamping supporting surface (223) is clamped in the clamping position (KS) with a force component of the clamping force (P2) orthogonal to the locating surface (16), so that the locating surface (16) of the locating body (44) adopts a predetermined longitudinal position with respect to the clamping locating region (217) and/or is in alignment with a stationary locating surface (206), which is stationary with respect to the support surface (15) and located at the holder (200) in particular, **characterised in that** the orthogonal force component of the clamping force (P2) and a locating force (AN) pressing the workpiece (W) against the locating surface (16) are aligned or point in the same direction, and/or **in that** a locating force (AN), with which the workpiece (W) acts on the locating surface (16) of the locating body (44), acts for the purpose of a reinforcement of the clamping force (P2).

2. Machine tool according to claim 1, **characterised in that** the clamping supporting surface (223) and/or the clamping locating surface (208) and/or the at least one clamping locating region (217) are/is parallel to the locating surface (16) of the at least one locating body (44) and/or to the stationary locating surface (206) or has an inclination of less than 45°, in particular less than 30° or 15°, with respect to the locating surface (16) or to the stationary locating surface (206).

3. Machine tool according to claim 1 or 2, **characterised in that** at least one recess is provided at the clamping supporting surface (223) and/or the clamping locating surface (208) and/or the clamping locating region (217), and/or **in that** the clamping supporting surface (223) and/or the clamping locating surface (208) and/or the at least one clamping locating region (217) are/is designed as plane surface(s) and/or extend(s) parallel to the locating surface (16).

4. Machine tool according to any of the preceding claims, **characterised in that** the clamping supporting surface (223) and the locating surface (16) of the at least one locating body (44) form a step or are arranged at a step and/or substantially have the same longitudinal length and/are arranged adjacent to each other, in particular on opposite sides of the support surface (15), with respect to a plane that is horizontal in the position of use and/or to the support surface (15).

5. Machine tool according to any of the preceding claims, **characterised in that** the clamping supporting surface (223) and/or the clamping body (231) are/is provided at a clamping projection (222) of the at least one locating body (44).

6. Machine tool according to any of the preceding claims, **characterised in that** the clamping body (231) and the clamping supporting surface (223) engage, while acting against each other, with a clamping receptacle (207) of the holder (200), which clamping receptacle (207) in particular forms a guide receptacle for the longitudinally displaceable guidance of the locating body (44).

7. Machine tool according to any of the preceding claims, **characterised in that** the holder (200) has at least one guide projection or at least one guide receptacle for the longitudinally displaceable mounting of the at least one the locating body (44) transverse to the support surface (15).

8. Machine tool according to any of the preceding claims, **characterised in that** hook contours engaging with one another at least in the clamping position (KS) and preferably in the release position (LS) as well are provided at the holder (200), in particular adjacent to the clamping locating surface (208) and at the at least one the locating body (44) and/or the clamping body (231), so that the at least one the locating body (44) is held captive at the holder (200) in a transverse direction, in particular a single transverse direction, transverse to the clamping locating surface (208), and/or cannot be removed from the holder (200) parallel to a vertical axis or normal axis of the support surface (15), wherein it is advantageously provided that the clamping body (231) has a first hook contour (236) for hooking to the holder (200) and a second hook contour (235) for hooking to the at least one the locating body (44), which hook contours are in engagement, in particular in the manner of a clamp, with hook contours of the locating body (44) and the holder (200) in the clamping position (KS).

9. Machine tool according to any of the preceding claims, **characterised in that** a clamping section of the clamping body (231) is located adjacent to a supporting surface (224) of the locating body (44), in particular in a recess (249) at the supporting surface, and projects farther in front of the supporting surface (224) in the clamping position (KS) than in the release position (LS), wherein the supporting surface (224) is expediently distant from an opposite surface of the holder (200) in the clamping position (KS).

10. Machine tool according to any of the preceding claims, **characterised in that** the clamping device (230) comprises an actuator, in particular a worm gear and/or a cam gear and/or a wedge mechanism and/or a lever mechanism, for moving the clamping body (231) between the release position (LS) and the clamping position (KS).

11. Machine tool according to any of the preceding claims, **characterised in that** the clamping body (231) is mounted at the at least one locating body (44) for pivoting and/or displacement between the clamping position (KS) and the release position (LS), in particular by means of a hook contour that can be hooked to the locating body (44), and/or **in that** the clamping body (231) is loaded towards the clamping position (KS) or the release position (LS) by a spring assembly, and/or **in that** an adjusting body, in particular a bolt, which can be operated by the control (241) or forms a part of the control (241), passes through the clamping body (231).

12. Machine tool according to any of the preceding claims, **characterised in that** the clamping supporting surface (223) and the locating surface (16) are located on opposite sides of the locating body (44).

13. Machine tool according to any of the preceding claims, **characterised in that** at least one holder (200) each for a locating body (44) is provided on opposite sides of the tool at the machine base (20) and/or at least one supporting part can be movably mounted at or secured to the machine base (20), which supporting part has a support surface (43) aligned to the support surface (15) of the machine base (20) for the workpiece (W), wherein the at least one locating body (44) can be positioned above the support surface (15) of the supporting part (40).

14. Machine tool according to any of the preceding claims, **characterised in that** the machine base (20) forms a swivel base (18), at which a swivel part (17) is mounted pivotably about a pivot axis (S) for changing a relative position of the tool holder (13) for the tool (14), in particular the cutting tool (14), and the locating surface (16) provided for locating a workpiece (W), wherein the swivel part (17) and/or the swivel base (18) advantageously provide(s) the support surface (15) for the workpiece (W) and/or a base for the drive assembly (11) and/or the holder (200) for the at least one locating body (44) is expediently stationary with respect to the swivel base.

15. Machine tool according to any of the preceding claims, **characterised in that** the drive assembly (11) is mounted in a linear fashion with respect to the machine base (20) at a linear guide (30) for carrying out longitudinal cuts with the cutting tool (14) and/or is mounted for pivoting about an inclined pivot axis (S3) with respect to the machine base (20) and/or is mounted for pivoting towards the workpiece support surface (15) provided for placing a workpiece (W) or away therefrom by means of a mitre / swivel bearing (35).

## Revendications

1. Machine-outil, en particulier machine-outil (10) semi-stationnaire ou mobile, pour l'usinage de pièces à usiner (W) à l'aide d'un outil (14), dans laquelle la machine-outil (10) présente une base de machine (20) pour le dépôt sur un sol, au niveau duquel un bloc d'entraînement (11) avec un moteur d'entraînement (12) et un logement d'outil (13) entraînable par le moteur d'entraînement (12) pour l'outil (14), en particulier pour un outil de séparation, et un support (200) pour au moins un corps d'appui (44) sont agencés, dans laquelle la base de machine (20) fournit une surface de contact (15) et l'au moins un corps d'appui (44) fournit une surface d'appui (16) dépassant en angle de la surface d'appui (15), en particulier à angle droit, pour la pièce à usiner (W) de sorte que la pièce à usiner (W) puisse être placée pour un usinage à l'aide de l'outil (14) reposant sur la surface contact (15) contre la surface d'appui (16), dans laquelle l'au moins un corps d'appui (44) présente un dispositif de serrage (230) pour le serrage avec le support (200), dans laquelle le dispositif de serrage (230) présente un élément de commande (241) commandable manuellement et un corps de serrage (231) actionnable par l'élément de commande (241) entre une position de serrage (KS) et une position de détachement (LS) qui serre dans la position de serrage (KS) une surface de support et de serrage (223) de l'au moins un corps d'appui (44) avec une force de serrage (P2) contre une surface d'appui et de serrage (208) du support (200) et libère dans la position de détachement (LS) de sorte que l'au moins un corps d'appui (44) soit serré par rapport au support (200) dans la position de serrage (KS) et soit mobile dans la position de détachement (LS), et dans laquelle la surface d'appui et de serrage (208) présente au moins une zone d'appui et de serrage (217) s'étendant à côté de la surface d'appui (16) transversale à la surface de contact (15) ou est formée par la zone d'appui et de serrage (217), contre laquelle la surface de support et de serrage (223) est serrée dans la position de serrage (KS) avec une composante de force à angle droit par rapport à la surface d'appui (16) de la force de serrage (P2) de sorte que la surface d'appui (16) du corps d'appui (44) par rapport à la zone d'appui et de serrage (217) occupe une position longitudinale prédéterminée et/ou s'aligne sur une surface d'appui stationnaire (206) agencée en particulier au niveau du support (200), stationnaire par rapport à la surface de contact (15), **caractérisée en ce que** la composante de force à angle droit de la force de serrage (P2) et une force d'appui (AN), avec laquelle la pièce à usiner (W) est pressée contre la surface d'appui (16), sont redressées ou dirigées dans la même direction et/ou qu'une force d'appui (AN), avec laquelle la pièce à usiner (W) agit sur la surface d'appui (16) du corps d'appui (44), agit au sens d'un renforcement de la force de serrage (P2).

2. Machine-outil selon la revendication 1, **caractérisée en ce que** la surface de support et de serrage (223) et/ou la surface d'appui et de serrage (208) et/ou l'au moins une zone d'appui et de serrage (217) est parallèle à la surface d'appui (16) de l'au moins un corps d'appui (44) et/ou à la surface d'appui stationnaire (206) ou présente une inclinaison oblique de moins de 45°, en particulier de moins de 30° ou 15° par rapport à la surface d'appui (16) ou surface d'appui stationnaire (206).

3. Machine-outil selon la revendication 1 ou 2, **caractérisée en ce qu'**au moins une cavité est agencée au niveau de la surface de support et de serrage (223) et/ou surface d'appui et de serrage (208) et/ou au niveau de la zone d'appui et de serrage (217) et/ou que la surface de support et de serrage (223) et/ou la surface d'appui et de serrage (208) et/ou l'au moins une zone d'appui et de serrage (217) sont configurées en tant que surfaces planes et/ou s'étendent parallèlement à la surface d'appui (16).

4. Machine-outil selon l'une quelconque des revendications précédentes, **caractérisée en ce que** la surface de support et de serrage (223) et la surface d'appui (16) de l'au moins un corps d'appui (44) forment un palier ou sont agencées sur un palier et/ou présentent sensiblement la même longueur longitudinale et/ou sont agencées par rapport à un plan horizontal en position d'utilisation et/ou la surface de contact (15) l'une à côté de l'autre, en particulier au niveau des côtés opposés l'un à l'autre de la surface de contact (15).

5. Machine-outil selon l'une quelconque des revendications précédentes, **caractérisée en ce que** la surface de support et de serrage (223) et/ou le corps de serrage (231) est prévu au niveau d'une saillie de serrage (222) de l'au moins un corps d'appui (44).

6. Machine-outil selon l'une quelconque des revendications précédentes, **caractérisée en ce que** le corps de serrage (231) et la surface de support et de serrage (223) agissant de manière opposée l'une à l'autre viennent en prise dans un logement de serrage (207) formant en particulier un logement de guidage pour le guidage mobile longitudinalement du corps d'appui (44) du support (200).

7. Machine-outil selon l'une quelconque des revendications précédentes, **caractérisée en ce que** le support (200) présente au moins une saillie de guidage ou au moins un logement de guidage pour le logement mobile longitudinalement de l'au moins un corps d'appui (44) transversalement à la surface de contact (15).

8. Machine-outil selon l'une quelconque des revendications précédentes, **caractérisée en ce qu'**au niveau du support (200), en particulier à côté de la surface d'appui et de serrage (208), et au niveau de l'au moins un corps d'appui (44) et/ou le corps de serrage (231), des contours à crochet sont prévus, lesquels viennent en prise au moins dans la position de serrage (KS), de préférence aussi dans la position de détachement (LS), les uns dans les autres de sorte qu'au moins un corps d'appui (44) soit maintenu dans un sens transversal, en particulier un seul sens transversal, transversalement à la surface d'appui et de serrage (208) de manière imperdable sur le support (200) et/ou ne puisse pas être retiré du support (200) parallèlement à un axe perpendiculaire ou axe normal de la surface de contact (15), dans laquelle il est avantageusement prévu que le corps de serrage (231) présente un premier contour à crochet (236) pour l'accrochage avec le support (200) et un second contour à crochet (235) pour l'accrochage avec l'au moins un corps d'appui (44) qui sont en prise dans la position de serrage (KS), en particulier à la manière d'une attache avec des contours à crochet du corps d'appui (44) et du support (200).

9. Machine-outil selon l'une quelconque des revendications précédentes, **caractérisée en ce qu'**une section de serrage du corps de serrage (231) est agencée à côté d'une surface de support (224) du corps d'appui (44), en particulier dans un évidement (249) sur la surface de support et dépasse plus dans la position de serrage (KS) de la surface de support (224) que dans la position de détachement (LS), dans laquelle la surface de support (224) est retirée dans la position de serrage (KS) de manière appropriée d'une surface qui lui est opposée du support (200).

10. Machine-outil selon l'une quelconque des revendications précédentes, **caractérisée en ce que** le dispositif de serrage (230) comporte un engrenage de réglage, en particulier un engrenage à vis et/ou engrenage à came et/ou engrenage à coin et/ou engrenage à levier pour le réglage du corps de serrage (231) entre la position de détachement (LS) et la position de serrage (KS).

11. Machine-outil selon l'une quelconque des revendications précédentes, **caractérisée en ce que** le corps de serrage (231) est logé de manière pivotante et/ou mobile au niveau de l'au moins un corps d'appui (44) entre la position de serrage (KS) et la position de détachement (LS), en particulier à l'aide d'un contour à crochet accrochable avec le corps d'appui (44) et/ou que le corps de serrage (231) est sollicité dans la position de serrage (KS) ou position de détachement (LS) par un agencement de ressort et/ou qu'un corps de réglage actionnable par l'élément de commande (241) ou formant un constituant de l'élément de commande (241), en particulier un boulon fileté, traverse le corps de serrage (231).

12. Machine-outil selon l'une quelconque des revendications précédentes, **caractérisée en ce que** la surface de support et de serrage (223) et la surface d'appui (16) sont agencées au niveau de côtés opposés l'un à l'autre du corps d'appui (44).

13. Machine-outil selon l'une quelconque des revendications précédentes, **caractérisée en ce qu'**au niveau des côtés opposés l'un à l'autre de l'outil sur la base de machine (20), respectivement au moins un support (200) pour un corps d'appui (44) est prévu et/ou sur la base de machine (20) au moins une partie de support est logée de manière mobile ou peut être fixée, laquelle présente une surface de contact (43) s'alignant sur la surface de contact (15) de la base de machine (20) pour la pièce à usiner (W), dans laquelle l'au moins un corps d'appui (44) peut être positionné au-dessus de la surface de contact (15) de la partie de support (40).

14. Machine-outil selon l'une quelconque des revendications précédentes, **caractérisée en ce que** la base de machine (20) forme une base de pivotement (18), au niveau de laquelle une partie de pivotement (17) est logée de manière pivotante autour d'un axe de pivotement (S) pour la modification d'une position relative du logement d'outil (13) pour l'outil (14), en particulier l'outil de séparation (14), et la surface d'appui (16) prévue pour le placement d'une pièce à usiner (W), dans laquelle la partie de pivotement (17) et/ou la base de pivotement (18) fournit avantageusement la surface de contact (15) pour la pièce à usiner (W) et/ou une base porteuse pour le bloc d'entraînement (11) et/ou de manière appropriée le support (200) est fixe pour l'au moins un corps d'appui (44) par rapport à la base de pivotement.

15. Machine-outil selon l'une quelconque des revendications précédentes, **caractérisée en ce que** le bloc d'entraînement (11) est logé de manière linéaire par rapport à la base de machine (20) au niveau d'un guidage linéaire (30) pour la réalisation de coupes longitudinales avec l'outil de séparation (14) et/ou est logé de manière pivotante autour d'un axe de pivotement oblique (S3) par rapport à la base de machine (20) et/ou est logé de manière pivotante à l'aide d'un palier de pivotement et de basculement (35) vers la surface d'appui de pièce à usiner (15) prévue pour le placement d'une pièce à usiner (W) et loin de celle-ci.
